# EUROPÄISCHE PATENTSCHRIFT

(11) **EP 3 908 485 B1**
(45) Veröffentlichungstag und Bekanntmachung des Hinweises auf die Patenterteilung: **27.03.2024**
(21) Anmeldenummer: 19804632.8
(22) Anmeldetag: 24.10.2019
(51) Int. Cl.: C06D 5/00, B60R 21/272, F42B 3/04, C06B 45/00

(54) **GASGENERATOR, MODUL UND FAHRZEUGSICHERHEITSSYSTEM**
GAS GENERATOR, MODULE AND VEHICLE SAFETY SYSTEM
GÉNÉRATEUR DE GAZ, MODULE ET SYSTÈME DE SÉCURITÉ DE VÉHICULE

(30) Priorität: 11.01.2019 DE 102019100623
(43) Veröffentlichungstag der Anmeldung: 17.11.2021
(73) Patentinhaber: ZF Airbag Germany GmbH, 84544 Aschau a. Inn (DE)
(72) Erfinder: LAST, Detlef, 84453 Mühldorf am Inn (DE); RAMP, Manfred, 84478 Waldkraiburg (DE); RUCKDESCHEL, Rolf, 84431 Heldenstein (DE)
(74) Vertreter: ZF Patentabteilung - DIPS
(86) Internationale Anmeldenummer: PCT/EP2019/079031
(87) Internationale Veröffentlichungsnummer: WO 2020/143939

(56) Entgegenhaltungen:
- DE-A1- 2 843 477
- DE-A1-102016 122 192
- US-A- 5 230 532
- US-A- 5 725 243
- US-B1- 6 170 867
- US-B1- 6 224 099

## Beschreibung

Die Erfindung betrifft einen Gasgenerator, insbesondere für eine Sicherheitseinrichtung in Fahrzeugen sowie ein Modul mit einem Gasgenerator und ein Fahrzeugsicherheitssystem.

Gasgeneratoren liefern beispielsweise Gas zum Füllen eines Gassacks oder für den Antrieb eines Gurtstraffers. Bei bekannten Hybridgasgeneratoren wird das Gas zum größten Teil aus einem im Gehäuse des Gasgenerators gespeicherten, unter Druck stehenden Gas erzeugt. Das Gehäuse wird dabei geöffnet, indem ein pyrotechnischer Anzünder einen pyrotechnischen Treibsatz zündet, der das Gas erwärmt und eine Membran zerstört, die das Gehäuse nach außen abschließt, sodass das Gas ausströmen kann.

Ein derartiger Hybridgasgenerator ist in der DE 10 2011 009 309 A1 beschrieben. Dabei steht die einen pyrotechnischen Festtreibstoff enthaltende Brennkammer in Strömungsverbindung mit der von der Brennkammer getrennten und mit Druckgas gefüllten Druckkammer. Die Druckkammer ist beispielsweise mit Argon, Helium oder einer Gasmischung unter einem Druck von bis zu 500 bar gefüllt. Das Druckgas umgibt bei diesem Gasgenerator auch den pyrotechnischen Festtreibstoff. Damit ist das Bauteil, das die Druckkammer gegenüber der Brennkammer abschließt, mechanisch nur gering belastet.

Die pyrotechnischen Festtreibstoffe sind ausbilanzierte Mischungen von festen organischen oder anorganischen Brennstoffen und Oxidationsmitteln, die in der Regel Stickstoff und Kohlenstoff enthalten. Die Festtreibstoffe müssen zur Steuerung der Abbrandcharakteristik in eine geeignete Form wie Tabletten, Extrudate und Granulate verschiedenster Geometrie gebracht werden. Daraus folgt eine aufwendige Herstellung und Logistik von pyrotechnischen Festtreibstoffen, wobei für die Handhabung und Lagerung der Treibstoffe strenge Sicherheitsvorschriften zu beachten sind.

In einem sogenannten "Bonfire-" oder "Slow Heat"-Test, der beispielsweise eine nicht funktionsgemäße Auslösung eines Gasgenerators bei einem Fahrzeugbrand simulieren soll, wird ein Gasgenerator durch äußere Überhitzung ausgelöst, also thermisch aktiviert beziehungsweise gezündet. Pyrotechnische Festtreibstoffe neigen bei erhöhter Temperatur jedoch zu einer erhöhten Umsetzungsgeschwindigkeit. Daher müssen die Gasgeneratorgehäuse ausreichend fest ausgelegt sein. Wahlweise ist eine Verwendung von zusätzlichen Frühzündeinrichtungen erforderlich, um die Auslösetemperaturen auf ein technisch handhabbares Maß zu begrenzen. Bei niedrigen Temperaturen von beispielsweise -40 °C haben die pyrotechnischen Festtreibstoffe dagegen eine geringere Umsetzungsgeschwindigkeit.

In anderen Gasgeneratoren wird zur Energieerzeugung die Reaktion von gasförmigen oder flüssigen Brennstoffen wie Wasserstoff oder Flüssiggas mit ebenfalls gasförmigen Oxidationsmitteln wie Sauerstoff verwendet. Derartige Gasgeneratoren benötigen entweder zwei voneinander getrennte Druckbehälter mit komplexer Öffnungs- und Anzündsteuerung, oder einen ausreichend dimensionierten Gasbehälter für ein brennbares Gasgemisch. In allen Fällen wird durch die Reaktion des pyrotechnischen Festtreibstoffs oder der gasförmigen bzw. flüssigen Brennstoffe ein Gas erzeugt.

Die WO 99/032334A beschreibt einen Gasgenerator mit einer ersten Kammer, in die ein Brennstoff eingebracht ist, und einem Anzünder zum Aktivieren einer Reaktion des Brennstoffs zur Bildung von gasförmigen Verbrennungsprodukten. Der Brennstoff liegt im festen Zustand vor und ist vorzugsweise ein offenzelliger Schaumstoff. Als Oxidationsmittel wird Stickoxid verwendet, das in Kontakt mit dem festen Brennstoff steht. Der Druck in der ersten Kammer kann von 4,1 bis 10,3 MPa betragen.

Aus der US 6 238 500 A1 ist ein Gasgenerator bekannt, der einen Druckbehälter mit einem unter Druck gespeicherten gaserzeugenden Material und einen Anzünder zur Aktivierung des gaserzeugenden Materials umfasst. Das gaserzeugende Material umfasst ein Oxidationsmittel und einen Brennstoff, wobei ein Hauptanteil des Oxidationsmittels aus Distickstoffmonoxid in flüssiggasförmigem Zustand besteht. Der Brennstoff ist größtenteils Polyvinylalkohol in fester, poröser Form, wobei ein Teil des Distickstoffmonoxids in den Poren des Polyvinylalkohols absorbiert ist. Beim Abbrand des gaserzeugenden Materials werden Verbrennungsprodukte gebildet, die im Wesentlichen aus Kohlendioxid, Stickstoff und Wasser bestehen. Zusammen mit dem gaserzeugenden Material kann eine Mischung aus einem oder mehreren Reaktivgasen und/oder Inertgasen in dem Druckbehälter gespeichert sein. Beispiele für Reaktivgase sind Sauerstoff, Butan oder Wasserstoff. Gemäß einem Ausführungsbeispiel beträgt der Druck im Druckbehälter etwa 13,8 MPa.

Bei Verwendung von Distickstoffmonoxid als Hauptoxidationsmittel lässt sich das Abbrandverhalten der Gasgeneratoren insbesondere bei niedrigen Temperaturen nur schlecht steuern oder reproduzieren, da das Distickstoffmonoxid auskondensieren kann und somit nicht in vollem Umfang für die Umsetzung mit dem festen Brennstoff zur Verfügung steht. Außerdem muss wegen des in der Druckkammer herrschenden niedrigen Drucks mehr Festtreibstoff verwendet werden, um die für die Aktivierung der Sicherheitseinrichtung erforderliche Gasmenge bereitzustellen.

Aus der US 5 725 243 A ist ein Gasgenerator mit einer Druckkammer bekannt, in der sich eine Gasmischung aus Sauerstoff, Argon und Helium befindet. Die Druckkammer ist durch eine Scheibe aus zerreißbarem Material, beispielsweise einer Aluminiumfolie, von einem Rohrabschnitt getrennt, in welchem sich Magnesium- und/oder Stahlwolle als fester Brennstoff befindet, wobei der Rohrabschnitt mittels eines Keramikfilters mit einer Ausströmöffnung in Verbindung steht. Im Auslösefall soll sich die Magnesium- und/oder Stahlwolle mit der Gasmischung umsetzen, um zusätzliche Wärme zu erzeugen.

Die US 5 230 532 A offenbart einen Gasgenerator mit einer Druckkammer, in der ein sauerstoffhaltiges Gas vorhanden ist und in dem sich ein metallischer Streifen, beispielsweise aus Zirkonium, Aluminium oder Magnesium, befindet. Der metallische Streifen kann ein Draht sein und wird im Auslösefall des Gasgenerators mittels elektrischer Kontakte aufgeheizt, sodass eine Oxidation mit dem in der Druckkammer vorhandenen Sauerstoff einsetzt.

Die US 6 170 867 B1 zeigt einen Gasgenerator mit einer Druckkammer, in welcher sich eine lineare Zündquelle befindet, das heißt eine sich in Längsrichtung der Druckkammer erstreckende Zündquelle, die eine Zündschnur sein kann. In der Druckkammer befindet sich zudem Distickstoffmonoxid, welches im Auslösefall des Gasgenerators durch Zündung über die lineare Zündquelle zersetzt wird.

Die DE 10 2016 122 192 A1 zeigt einen Gasgenerator mit einer mit Druckgas gefüllten Druckkammer, wobei das Druckgas ein gasförmiges Oxidationsmittel enthält, das hauptsächlich aus Sauerstoff besteht. In der Druckkammer ist ein offenzelliger poröser und fester Brennstoff aufgenommen, der in direktem Kontakt mit dem Druckgas steht. Als poröser Brennstoff werden Schaumkörper verschiedener Geometrie genannt, bevorzugt aus einem Kunststoff.

Die US 6 224 099 B1 offenbart einen Gasgenerator mit einem trockenen Zündelement, das aus einer extrudierten Zündzusammensetzung gebildet ist, die vor dem Trocknen einen in Wasser gelösten Binder, ein Oxidationsmittel, einen Brennstoff und optional Fasern umfasst. Der Binder ist ausgewählt aus der Gruppe bestehend aus wasserlöslichen polymerbasierten Bindern, wasserlöslichem Gummi und wasserlöslicher Gelatine.

Aus der DE 28 43 477 A1 sind hülsenlose Treibmittelkörper bekannt, die ein Treibmittel mit einer Verpuffungstemperatur oberhalb 180 °C und einen polymeren Bindemittelanteil von 3 bis 10 Gew.-% besitzen. Zusätzlich sind zur mechanischen Verstärkung der Treibmittelkörper 0,1 bis 10 Gew.-% synthetische Fasern, natürliche organische Fasern, anorganische Fasern oder Kohlefasern enthalten.

Es hat sich jedoch gezeigt, dass einige der industriell verfügbaren Kunststoffschäume keine ausreichend hohe Porosität aufweisen, wodurch das im Druckgas vorhandene Oxidationsmittel den Brennstoff nicht optimal durchdringen und verbrennen kann. Einige der besonders vorteilhaft abbrennenden Materialien sind zudem überhaupt nicht als Schaum oder lediglich als geschlossenporiger Schaum erhältlich.

Der Erfindung liegt die Aufgabe zugrunde, einen bekannten Gasgenerator so weiter zu entwickeln, dass dieser zuverlässig Gas erzeugen und kostengünstig hergestellt werden kann. Weiters liegt der Erfindung die Aufgabe zugrunde, ein kostengünstiges Modul und ein Fahrzeugsicherheitssystem anzugeben.

Diese Aufgabe wird bezüglich des Gasgenerators durch einen Gasgenerator gemäß Anspruch 1, bezüglich des Moduls durch ein Modul gemäß Anspruch 13 und bezüglich des Fahrzeugsicherheitssystems durch ein Fahrzeugsicherheitssystem gemäß Anspruch 14 gelöst. Weitere Ausführungsformen sind in den Unteransprüchen angegeben, deren Merkmale in technisch sinnvoller Weise beliebig miteinander kombiniert werden können.

Der erfindungsgemäße Gasgenerator umfasst eine mit Druckgas gefüllte Druckkammer, die durch eine Membran von einer Umgebung des Gasgenerators abgeschlossen ist. Das Druckgas enthält ein gasförmiges Oxidationsmittel, das zu einem Hauptanteil aus Sauerstoff besteht. In der Druckkammer ist ein fester Brennstoff aufgenommen, wobei das Druckgas vor einer Aktivierung des Gasgenerators in direktem Kontakt mit dem Brennstoff steht.

Bei Aktivierung des Gasgenerators löst ein druckdicht von der Druckkammer getrennter Anzünder eine Umsetzung des gasförmigen Oxidationsmittels mit dem festen Brennstoff unter Wärmeentwicklung aus, beziehungsweise durch den Anzünder ist bei Aktivierung des Gasgenerators eine Umsetzung des gasförmigen Oxidationsmittels mit dem festen Brennstoff unter Wärmeausbildung auslösbar.

Der feste Brennstoff liegt erfindungsgemäß in Form eines aus einer oder mehreren Fasern zusammengesetzten gasdurchlässigen Brennstoffkörpers vor. Dabei hat sich überraschenderweise gezeigt, dass aus einer oder mehreren Fasern hergestellte Brennstoffkörper eine ausreichend große Oberfläche und eine insbesondere gegenüber Kunststoffschäumen überlegene Abbrandcharakterisik aufweisen.

Der molare Anteil des gasförmigen Oxidationsmittels in dem Druckgas beträgt mindestens das 1,1-fache der für eine stöchiometrische Umsetzung des gasdurchlässigen Brennstoffkörpers erforderlichen Menge an Oxidationsmittel.

Bei dem erfindungsgemäßen Gasgenerator steht das gasförmige Oxidationsmittel in direktem Kontakt mit dem aus einer oder mehreren Fasern zusammengesetzten gasdurchlässigen Brennstoffkörper. Der Brennstoff liegt von Anfang an in fein verteilter Form mit einer definierten Anordnung in der Druckkammer vor, beispielsweise in Form eines Gewebes, einer Watte oder eines anderen in Anspruch 1 aufgezählten textilen Materials. Die Zwischenräume oder Poren des Brennstoffkörpers können sich daher gut mit dem das gasförmige Oxidationsmittel enthaltenden Druckgas mischen, wodurch sich der Brennstoff immer in unmittelbarer Nähe zum Oxidationsmittel befindet. Dadurch wird im Aktivierungsfall durch Auslösen des Anzünders eine sehr schnelle Umsetzung des Brennstoffs mit dem Oxidationsmittel erreicht. Insbesondere kann mit dem erfindungsgemäßen Gasgenerator auch eine sehr kurze Abbranddauer von <0,1 Sekunden erzielt werden.

Die druckdichte Abgrenzung des Anzünders von der mit Druckgas und dem Brennstoffkörper gefüllten Druckkammer ermöglicht es, kostengünstige Bauteile für den Anzünder und dessen Befestigung, wahlweise in einer Anzünderkammer, zu verwenden. Die vom Anzünder freigesetzte Energie muss lediglich dazu ausreichen, eine die Anzünderkammer begrenzende Anzündermembran zu öffnen und die Umsetzung des Brennstoffs mit dem gasförmigen Oxidationsmittel zu aktivieren.

Aufgrund der hohen Energiedichte des in fester Form als gasdurchlässiger Brennstoffkörper vorliegenden Brennstoffs, der aus einer oder mehreren Fasern zusammengesetzt ist, können Brennstoffkörper mit geringer Dichte und daher auch geringem Gewicht eingesetzt werden. Das in stöchiometrischem Überschuss vorliegende gasförmige Oxidationsmittel gewährleistet, dass der Brennstoffkörper nach der Aktivierung des Anzünders vollständig abbrennt.

Das unter hohem Druck stehende Druckgas stellt seinerseits die Hauptmenge der zur Aktivierung der Sicherheitseinrichtung erforderlichen Gasmenge bereit. Über die Formgebung und Dimensionierung des festen Brennstoffkörpers kann die Abbrandcharakteristik und damit die Gasgeneratorleistung weiter gesteuert werden.

Der gasdurchlässige Brennstoffkörper kann außerdem in einfacher Weise innerhalb der Druckkammer und relativ zum Anzünder positioniert werden. Beispielsweise ist es möglich, den Brennstoffkörper zwischen zwei Punkten in der Druckkammer einzuklemmen oder an die Innenwand der Druckkammer anzukleben.

Für die Herstellung des Brennstoffkörpers geeignete Fasern werden in großindustriellem Maßstab hergestellt, sind weltweit verfügbar und daher äußerst kostengünstig. Des Weiteren können die Fasern in einer Vielzahl verschiedener dreidimensionaler Strukturen weiterverarbeitet werden, um die Abbrandcharakteristik einzustellen. Bei Auswahl geeigneter Materialien für den gasdurchlässigen Brennstoffkörper kann außerdem ein vollständiger, schadstoffarmer Abbrand unter Bildung von ausschließlich gasförmigen Verbrennungsprodukten, ohne staubförmige Rückstände, erreicht werden.

Der im Aktivierungsfall ausgelöste Anzünder öffnet die druckdichte Abgrenzung zwischen Anzünder und Druckkammer und erwärmt gleichzeitig den Brennstoffkörper und das Oxidationsmittel auf eine Temperatur, die ausreicht, um die Umsetzung des Brennstoffs mit dem gasförmigen Oxidationsmittel zu starten. Durch die Umsetzung des Brennstoffs mit dem Oxidationsmittel freigesetzte Reaktionswärme heizt sich das Druckgas weiter auf. Der dadurch entstehende Überdruck in der Druckkammer oder eine nach Aktivierung des Anzünders erzeugte Schockwelle öffnet eine die Druckkammer von der Umgebung des Gasgenerators trennende Membran. Das erhitzte Druckgas strömt aus und betätigt eine Sicherheitseinrichtung, beispielsweise einen Gassack, einen Gurtstraffer oder einen Fußgängeraufprallschutz.

Die Umsetzung des festen Brennstoffs mit dem gasförmigen Oxidationsmittel im Gasgenerator kann beispielsweise über die Porengröße im Brennstoffkörper, die Dicke der einen oder mehreren Fasern, die chemische Zusammensetzung des Brennstoffs und den Anteil an Sauerstoff im Druckgas gesteuert werden. Da Sauerstoff unter allen im Gasgenerator herrschenden Druckbedingungen gasförmig vorliegt, ist eine gute Durchdringung des aus einer oder mehreren Fasern zusammengesetzten gasdurchlässigen Brennstoffkörpers mit Oxidationsmittel gewährleistet. Umgekehrt liegt der Brennstoff äußerst fein verteilt im Druckgas vor. Die Verwendung des gasförmigen Oxidationsmittels in stöchiometrischen Überschuss stellt außerdem eine schnelle und vollständige Umsetzung des festen Brennstoffs sicher.

Die bei der Umsetzung des Brennstoffs entstehende Reaktionswärme kann zur Erwärmung des Druckgases genutzt werden. Beispielsweise liefert die Umsetzung eines typischen aus einer oder mehreren Fasern zusammengesetzten gasdurchlässigen Brennkörpers mit Sauerstoff eine Reaktionswärme, die mindestens etwa 8-fach höher ist als die Reaktionswärme der Umsetzung eines typischen pyrotechnischen Festtreibstoffs. Die bei der Umsetzung des gasdurchlässigen Brennstoffkörpers mit Sauerstoff entstehenden Reaktionsgase müssen somit nur zu einem geringen Teil zu der für die Aktivierung der Sicherheitseinrichtung notwendigen Gasmenge beitragen.

Im "Bonfire-" oder "Slow Heat"-Fall öffnet sich die Druckkammer durch den entstehenden Überdruck. Dadurch wird dem System der größte Teil des Oxidationsmittels entzogen und der Brennstoff kann sich nur noch langsam zersetzen. Ein beschleunigter Abbrand mit Verpuffung des Brennstoffs ist nicht zu erwarten, da diese Reaktion allenfalls eine geringe Gasmenge erzeugt und das zur Umsetzung notwendige Oxidationsmittel weitgehend fehlt.

Gemäß einer ersten Ausführungsform des erfindungsgemäßen Gasgenerators besteht das Druckgas bevorzugt aus wenigstens einem Inertgas und dem wenigstens einen gasförmigen Oxidationsmittel. Das Inertgas kann aus der aus Helium, Argon und Stickstoff sowie deren Mischungen bestehenden Gruppe ausgewählt sein.

Erfindungsgemäß besteht das gasförmige Oxidationsmittel zu einem Hauptanteil aus Sauerstoff und wahlweise weiteren gasförmigen Oxidationsmitteln. "Gasförmig" bedeutet, dass das Oxidationsmittel unter Standardbedingungen (273,15 K und 1,0 bar) im gasförmigen Zustand vorliegt. "Hauptanteil" bedeutet im Sinne der Erfindung einen molaren Anteil von über 50 %, vorzugsweise mindestens 60 %, weiter bevorzugt mindestens 70 %, mindestens 80 % oder mindestens 90 % Sauerstoff (O₂) am gasförmigen Oxidationsmittel.

Besonders bevorzugt besteht das gasförmige Oxidationsmittel aus Sauerstoff.

Wahlweise könnte ein weiteres Oxidationsmittel auch Distickstoffmonoxid umfassen. Die Verwendung von Sauerstoff als gasförmiges Oxidationsmittel hat den Vorteil der leichten Verfügbarkeit und der sicheren Durchdringung des in der Druckkammer vorliegenden gasdurchlässigen Brennstoffkörpers. Damit ist eine schnelle Umsetzung des festen Brennstoffs mit dem gasförmigen Oxidationsmittel im Falle einer Aktivierung des Gasgenerators sichergestellt.

Bevorzugt beträgt der Anteil des gasförmigen Oxidationsmittels im Druckgas mindestens etwa 200 % und maximal etwa 1000 % der für eine stöchiometrische Umsetzung des Brennstoffs mit dem gasförmigen Oxidationsmittel benötigten Menge. Durch Verwendung eines hinreichenden Überschusses an gasförmigem Oxidationsmittel kann gewährleistet werden, dass eine vollständige Umsetzung des festen Brennstoffs mit dem gasförmigen Oxidationsmittel erfolgt und somit die maximale Wärmemenge zur Erwärmung des übrigen Druckgases freigesetzt wird.

Das wenigstens eine gasförmige Oxidationsmittel kann in einem Anteil von 10 bis 40 Vol.-% im Druckgas vorliegen, bevorzugt von 10 bis 30 Vol.-%, weiter bevorzugt 15 bis 30 Vol.-%.

Die mittlere molare Masse des Druckgases liegt bevorzugt zwischen 7 und 39 g/mol. Die mittlere molare Masse entspricht dem Mittelwert der molaren Massen der einzelnen Komponenten des Druckgases, gewichtet mit den jeweiligen Stoffmengenanteilen.

Besonders bevorzugt ist das Druckgas eine Mischung aus Argon, Helium und Sauerstoff.

Gemäß einer besonders bevorzugten Ausführungsform steht das Druckgas in der geschlossenen Druckkammer unter einem Druck von mindestens 350 bar, vorzugsweise von 350 bis 700 bar. Damit ist gewährleistet, dass die Menge des Druckgases bereits für sich dazu ausreicht, die mit dem Gasgenerator verbundene Sicherheitseinrichtung zu aktivieren, beispielsweise einen Gassack vollständig aufzublasen. Die Umsetzung des festen Brennstoffs mit dem gasförmigen Oxidationsmittel muss dazu kein zusätzliches Gas bereitstellen, sondern nur die für die Erwärmung des Druckgases notwendige Wärmemenge freisetzen, damit ein hinreichender Aufblasdruck aufrechterhalten werden kann. Jedoch ist es nicht nachteilig, und in vielen Fällen auch erwünscht, wenn die Umsetzung des gasdurchlässigen Brennstoffkörpers mit dem gasförmigen Oxidationsmittel im Wesentlichen rückstandsfrei abläuft und gasförmige Umsetzungsprodukte gebildet werden.

Der als Brennstoff dienende und aus einer oder mehreren Fasern zusammengesetzte gasdurchlässige Brennstoffkörper kann über eine Vielzahl verschiedener Technologien aus Endlosfasern - auch als Monofil bezeichnet - oder aus Fäden, welche aus mehreren Fasern zusammengesetzt sind, aufgebaut werden.

Erfindungsgemäß ist der Brennstoffkörper aus einem textilen Material aufgebaut, in dem die eine oder mehreren Fasern enthalten sind. Das textile Material ist aus der aus einem Gewebe, einem Gewirk, einem Gestrick, einem Vlies, einem Gelege, einem Filz oder einer Watte und Kombinationen davon bestehenden Gruppe ausgewählt. Auf diese Weise kann für jedes Fasermaterial die am besten geeignete Struktur des textilen Brennstoffkörpers gewählt und an die gewünschte Abbrandcharakteristik angepasst werden. Generell weisen die zwei- und dreidimensionalen textilen Strukturen eine große Oberfläche auf, sodass eine zügige Umsetzung mit dem Oxidationsmittel gewährleistet ist.

Die einzelnen Fasern können dabei verschiedene Strukturen aufweisen, beispielsweise als Mehrkomponenten-, Stapel-, Rund- oder Hohlfaser sowie als Monofilament vorliegen. Die Fasern selbst können zur weiteren Vergrößerung der Oberfläche mikroporös sein. Generell weisen die verwendeten Fasern oder Fäden des Ausgangsmaterials eine definierte Materialdicke von 0,01 bis 1 mm auf.

Als Fasern können Naturfasern verwendet werden, insbesondere pflanzliche Naturfasern, und bevorzugt Fasern, die aus Cellulose oder Stärke gewonnen werden, wobei diese auch chemisch nachbehandelt sein können. Solche Fasern umfassen insbesondere Zelluloseether, Zelluloseester, Zelluloseacetat, Zelluloseacetatbutyrat, Zellulosepropionat, Nitrozellulose, Phenole, Polysaccharide und Polyacetale. Grundsätzlich eigenen sich auch tierische Naturfasern, wie beispielsweise Wollfasern.

Ferner können als Fasermaterial auch Synthesefasern aus spinnfähigen Kunststoffen verwendet werden, beispielsweise aus Polyolefinen, wie Polypropylen, Polyethylen, Polybutadien und/oder Polystyrol, sowie Polyamide, Vinylpolymere, insbesondere Polyvinylacetat, Polyurethan, Polyether, Polyester, insbesondere Polyethylenterephthalat, Polytrimethylenterephthalat und Polybutylenterephthalat, Polyimide, Polyamidimid, Aramide, Polyacrylate, Polyacrylnitril, Polybenzimidazol, Polyharnstoff, Melaminharze, Polyvinylalkohol und/oder Polymethacrylat.

Des Weiteren können die Fasern auch aus Wachsen oder sauerstoffhaltigen Stoffen gewonnen werden, beispielweise aus Pyrol, Naphthalin, sowie aus Nitratsalzen von Aminen, Nitraminen und Nitroverbindungen.

Im Brennstoffkörper können auch verschiedene Fasern nebeneinander vorliegen und/oder miteinander zu einer dreidimensionalen Struktur verbunden sein.

Vorteilhafterweise können die Fasern zu Fäden versponnen und/oder zu Garnen und/oder Zwirnen verdreht sein. Dadurch ergeben sich stabilere textile Fasermaterialien zur weiteren Verarbeitung. Die einzelnen Fäden, Garne und/oder Zwirne können anschließend verwendet werden, um textile Flächengebilde und/oder dreidimensionale Faserkörper zu bilden.

Der gasdurchlässige textile Brennstoffkörper kann in Form eines zylindrischen Körpers, eines Wickels, einer Spirale oder eines Streifenbands ausgebildet und wahlweise mit Abstandselementen versehenen sein. Generell können die textilen Flächengebilde und/oder dreidimensionalen Faserkörper weiterverarbeitet werden, beispielsweise durch Rollen, Verknäueln, Stopfen, Schneiden und/oder Stanzen. Auch können mehrere Faserkörper aufeinandergestapelt und/oder aneinander befestigt werden.

Die geometrische Form des gasdurchlässigen Brennstoffkörpers ist vorzugsweise an die Form des den Brennstoffkörper aufnehmenden Abschnitts der Druckkammer angepasst. Der gasdurchlässige Brennstoffkörper kann einstückig, das heißt als Monolith, in die Druckkammer eingesetzt werden, so dass der gesamte Brennstoff in einem einzelnen Brennstoffkörper vorliegt. Alternativ zu dieser Ausführungsform kann der gasdurchlässige Brennstoffkörper in der Druckkammer auch in mehreren Teilen vorliegen.

Gemäß einer Ausführungsform umfasst der gasdurchlässige Brennstoffkörper einen Träger, bevorzugt eine Haspel, auf dem die einzelne oder mehrere Fasern aufgewickelt sind. Mittels einer Haspel lässt sich besonders einfach ein Fasermaterial, insbesondere ein Faden, ein Garn oder ein Zwirn, bestimmter Länge ablängen und anschließend als Fadenwickel innerhalb des Gasgenerators montieren.

Die Fasermaterialien können auch eine zusätzliche Beschichtung aufweisen und so als ein Verbundmaterial mit einer Matrix aus brennbarer Faser und auf dieser dispergierten, vorzugsweise mit Sauerstoff unter Wärmeentwicklung umsetzbaren Füllstoffen gebildet sein.

Als Füllstoff können auch Metalle in Form eines Metallschaums und/oder eines metallischen Füllstoffs eingesetzt werden, vorzugsweise aus Aluminium, Magnesium, Titan sowie Legierungen und Mischungen davon ausgewählt. Diese Metalle sind kostengünstig verfügbar und weisen bei Umsetzung mit Sauerstoff eine sehr hohe Reaktionswärme auf. Die Metalle sowie Verbundstoffe sind unter den Einsatzbedingungen eines Fahrzeugs auch nahezu unbegrenzt lagerstabil. Außerdem ist die Handhabung dieser Brennstoffe im Vergleich zu pyrotechnischen Festtreibstoffen viel sicherer, sodass keine aufwändigen und teuren Sicherheitsmaßnahmen getroffen werden müssen.

Als mit dem gasförmigen Oxidationsmittel unter Wärmeentwicklung umsetzbare Fasern werden in dem gasdurchlässigen Brennstoffkörper vorzugsweise solche Stoffe eingesetzt, bei deren Abbrand nur gasförmige Verbrennungsprodukte wie beispielsweise Kohlendioxid und Wasser entstehen, und die keine Partikel freisetzen.

Gemäß einer besonders bevorzugten Ausführungsform besteht der gasdurchlässige Brennstoffkörper allein aus einem solchen Kunststoff, der bei der Umsetzung mit dem gasförmigen Oxidationsmittel nur gasförmige Verbrennungsprodukte ergibt.

Die Dichte des gasdurchlässigen Brennstoffkörpers liegt vorzugsweise in einem Bereich von 10 bis 90 kg/m³, vorzugsweise von 10 bis 60 kg/m³. Über die Dichte des gasdurchlässigen Brennstoffkörpers können die Abbrandeigenschaften gesteuert werden. Je dichter der Brennstoffkörper, desto langsamer erfolgt die Umsetzung mit dem gasförmigen Oxidationsmittel, insbesondere Sauerstoff. Jedoch können mit dichteren gasdurchlässigen Brennstoffkörpern auch höhere Energiemengen erzeugt werden. Aufgrund der niedrigen Dichte des gasdurchlässigen Brennstoffkörpers können Abbrandgeschwindigkeiten von größer als 0,1 m/s, insbesondere 3 m/s, oder höher erreicht werden.

Die Stauchhärte des gasdurchlässigen Brennstoffkörpers liegt vorzugsweise in einem Bereich von 2,0 bis 10 kPa. Mit der Stauchhärte wird die Kraft angegeben, die notwendig ist, um einen Prüfkörper auf 40 % seiner ursprünglichen Höhe zwischen zwei Platten zusammenzudrücken. Es werden quadratische Prüfkörper mit Abmessungen von 100 x 100 mm² und einer Höhe von 50 mm verwendet.

Der gasdurchlässige Brennstoffkörper kann pigmentiert oder auf andere Weise farblich gekennzeichnet sein. Dadurch ist es möglich, zwischen Brennstoffkörpern mit verschiedenen Zusammensetzungen und verschiedenen Abbrandeigenschaften zu unterscheiden.

Zur weiteren Steuerung der Abbrandeigenschaften ist es ferner möglich, einen gasdurchlässigen Brennstoffkörper zu verwenden, der zwei oder mehr verschiedene textile Flächengebilde und/oder Faserkörper mit gleicher oder unterschiedlicher Zusammensetzung, Geometrie und/oder Dichte umfasst. Auf diese Weise können die Abbrandeigenschaften des Brennstoffs weiter beeinflusst werden. Beispielsweise ist es möglich, einen oder mehrere Faserkörper aus dem gasdurchlässigen Brennstoff mit hoher Dichte anzündernah in der Druckkammer anzuordnen, während ein oder mehrere Faserkörper aus dem gasdurchlässigen Brennstoff mit niedriger Dichte entfernt vom Anzünder angeordnet sind. Bei einer Aktivierung des Anzünders und Umsetzung der anzündernahen Faserkörper wird dann zunächst eine hohe Energiemenge erzeugt, während im weiteren Verlauf des Brennstoffabbrands aufgrund der niedrigeren Dichte der anzünderfern angeordneten Brennstoff-Faserköper eine höhere Abbrandgeschwindigkeit erzielt werden kann.

Der gasdurchlässige Brennstoffkörper kann insbesondere anzünderseitig eine höhere Dichte aufweisen als auf der dem Anzünder entgegengesetzten Seite der Druckkammer, wobei der gasdurchlässige Brennstoffkörper bevorzugt einen Dichtegradienten mit einer vom Anzünder zur Membran hin abnehmenden Dichte aufweist. Zur Steuerung der Abbrandeigenschaften kann aber auch ein umgekehrter Dichteverlauf wie zuvor beschrieben, günstiger sein. In einem solchen Fall weist der gasdurchlässige Brennstoffkörper anzünderseitig eine geringere Dichte auf, als auf der dem Anzünder entgegengesetzten Seite der Druckkammer. Hier weist der gasdurchlässige Brennstoffkörper bevorzugt einen Dichtegradienten mit einer vom Anzünder zur Membran hin zunehmenden Dichte auf. Anstelle der Verwendung von unterschiedlichen Formkörpern aus dem gasdurchlässigen Brennstoff ist es auch möglich, einen monolithischen gasdurchlässigen Brennstoffkörper mit Dichtegradient zu verwenden.

Der gasdurchlässige Brennstoffkörper kann die Druckkammer ganz oder teilweise ausfüllen. Bevorzugt füllt der gasdurchlässige Brennstoffkörper mindestens etwa 3 %, bevorzugt 3 bis 95 %, besonders bevorzugt 5 bis 50% des Volumens der Druckkammer aus. Ausführungsformen mit einer hohen Füllung des Druckkammervolumens durch den gasdurchlässigen Brennstoffkörper sind besonders vorteilhaft, wenn bei der Aktivierung des Gasgenerators eine Schockwelle erzeugt wird, mit deren Hilfe die die Druckkammer von der Umgebung des Gasgenerators trennende Membran sehr schnell geöffnet wird. Die den gasdurchlässigen Brennstoffkörper durchlaufende Schockwelle kann in diesem Fall durch den gasdurchlässigen Brennstoffkörper mechanisch über weite Strecken und mit hoher Geschwindigkeit übertragen werden, sodass eine besondere Gestaltung des Gasgenerators möglich wird, ohne die Funktion des Gasgenerators wesentlich zu beeinträchtigen.

Gemäß einer bevorzugten Ausführungsform ist der gasdurchlässige Brennstoffkörper der einzige Brennstoff in der Druckkammer. Zusammen mit dem gasförmigen Oxidationsmittel bildet der gasdurchlässige Brennstoffkörper dann den einzigen Treibstoff in der Druckkammer. Eine solche Ausführungsform lässt sich kostengünstig herstellen und sicher handhaben, da der gasdurchlässige Brennstoffkörper im Unterschied zu pyrotechnischen Festtreibstoffen ohne besondere Sicherheitsvorkehrungen transportiert, gelagert und verarbeitet werden kann.

Gemäß einer weiteren Ausführungsform der vorliegenden Erfindung kann der gasdurchlässige Brennstoffkörper in der Druckkammer zusammen mit einem pyrotechnischen Festtreibstoff vorliegen. Durch den Zusatz des pyrotechnischen Festtreibstoffs können zum einen die Abbrandeigenschaften des gaserzeugenden Materials und damit die Gasgeneratorleistung modifiziert werden. Des Weiteren ist es mit dieser Ausführungsform möglich, dass der gasdurchlässige Brennstoffkörper lediglich in einem Anteil eingesetzt wird, der dazu ausreicht, dass der gasdurchlässige Brennstoffkörper zusammen mit dem gasförmigen Oxidationsmittel als Verstärkerladung für die Aktivierung des pyrotechnischen Festtreibstoffs wirkt. Zusätzlich kann der gasdurchlässige Brennstoffkörper im Brennkammerabschnitt weitere Funktionen übernehmen, wie beispielsweise die Funktion einer Abstützung des pyrotechnischen Festtreibstoffs zur Vermeidung von Rasselgeräuschen und/oder eines Volumenausgleichsmittels. Die Erfindung ermöglicht es daher, in herkömmlichen Gasgeneratoren bisher schon vorhandene Funktionselemente zusätzlich zur Gaserzeugung und/oder Erzeugung von Wärmeenergie zu nutzen.

Im Sinne der Erfindung ist ein pyrotechnischer Festtreibstoff ein Stoff oder Stoffgemisch, das mindestens einen festen Brennstoff und ein festes Oxidationsmittel enthält, und der nach Aktivierung selbstunterhaltend unter Wärmeentwicklung reagiert.

Der pyrotechnische Festtreibstoff kann in Form eines Granulats oder in Form von Tabletten, oder beliebig anderen geometrischen Formkörpern, vorliegen, die in den aus einer oder mehreren Fasern zusammengesetzten, gasdurchlässigen Brennstoffkörper integriert sind. Der gasdurchlässige Brennstoffkörper bildet somit eine Matrix, in welcher der pyrotechnische Festtreibstoff aufgenommen beziehungsweise integriert ist, wahlweise in Form von Formkörpern mit definierter Geometrie. Bei dieser Ausführungsform stehen der gasdurchlässige Brennstoffkörper und der pyrotechnische Festtreibstoff in einem besonders engen Kontakt miteinander. Die Abbrandeigenschaften des gaserzeugenden Gemischs in der Druckkammer können so optimal reproduzierbar eingestellt werden, insbesondere durch den Anteil von pyrotechnischem Festtreibstoff zu gasdurchlässigem Brennstoffkörper.

Weitere Möglichkeiten zur Ausgestaltung des gasdurchlässigen Brennstoffkörpers sowie des pyrotechnischen Festtreibstoffs findet der Fachmann in der DE 10 2016 122 192 A1.

Das Gewichtsverhältnis von gasdurchlässigem Brennstoffkörper zu pyrotechnischem Festtreibstoff in der Brennkammer kann nahezu frei gewählt werden. Da der Zusatz des pyrotechnischen Festtreibstoffs zum gasdurchlässigen Brennstoffkörper optional ist, liegt ein bevorzugter Gewichtsanteil des gasdurchlässigen Brennstoffkörpers im Bereich von etwa 0,5 bis 100 %, vorzugsweise von 1 bis 95 %, jeweils bezogen auf die Gesamtmasse von gasdurchlässigem Brennstoffkörper und pyrotechnischem Festtreibstoff.

Gemäß einer bevorzugten Ausführungsform bildet der gasdurchlässige Brennstoffkörper, insbesondere zusammen mit dem gasförmigen Oxidationsmittel, eine Verstärkerladung für den pyrotechnischen Festtreibstoff. In diesem Fall beträgt der Gewichtsanteil des gasdurchlässigen Brennstoffkörpers bevorzugt von etwa 0,25 bis 15 Gew.-%, vorzugsweise von 0,5 bis 10 Gew.-%, jeweils bezogen auf die Gesamtmasse von gasdurchlässigem Brennstoffkörper und pyrotechnischem Festtreibstoff. Bei einer Aktivierung des Gasgenerators erfolgt dann zunächst ein schneller Abbrand des gasdurchlässigen Brennstoffkörpers, wobei die durch diesen Abbrand freigesetzte Reaktionsenergie den Abbrand des pyrotechnischen Festtreibstoffs aktiviert. Zur Verbesserung des Energieeintrags in den pyrotechnischen Festtreibstoff kann der gasdurchlässige Brennstoffkörper in diesem Fall bevorzugt einen Anteil an Metall, vorzugsweise Metallpulver, enthalten.

Im Folgenden ist der Aufbau des erfindungsgemäßen Gasgenerators näher erläutert. Die nachfolgend beschriebenen Ausführungsformen können zusammen mit allen Varianten des oben beschriebenen aus einer oder mehreren Fasern zusammengesetzten, gasdurchlässigen Brennstoffkörpers und wahlweise des pyrotechnischen Festtreibstoffs verwendet werden.

Gemäß einer bevorzugten Ausführungsform des erfindungsgemäßen Gasgenerators ist das die Druckkammer begrenzende Gehäuse des erfindungsgemäßen Gasgenerators als Hohlzylinder ausgebildet. Bevorzugt ist das Gehäuse mit einer Einbuchtung in Form einer Ringnut versehen. Die Ringnut kann bevorzugt zur Fixierung des gasdurchlässigen Brennstoffkörpers in der Druckkammer verwendet werden. Die Anordnung der Ringnut definiert somit auch die Abmessung des Abschnitts in der Druckkammer, in welchem der gasdurchlässige Brennstoffkörper und wahlweise der pyrotechnische Festtreibstoff aufgenommen ist. Somit kann die Anordnung der Ringnut am Gehäuse auch die Gasgeneratorleistung anzeigen, die unter anderem über die Menge des gasdurchlässigen Brennstoffkörpers bestimmt wird, der in die Druckkammer eingebracht ist.

Weiterhin kann vorgesehen sein, den gasdurchlässigen Brennstoffkörper durch Kraftschluss, Formschluss und/oder über eine Klebung an einer Seitenwand auf der Innenseite des Gehäuses, in der Druckkammer, zu fixieren. Des Weiteren ist es möglich, den gasdurchlässigen Brennstoffkörper in das Gehäuse einzupressen und in Radialrichtung zu stauchen, vorzugsweise eine Stauchung von bis zu 10 % vorzunehmen, sodass der gasdurchlässige Brennstoffkörper über einen Kraftschluss in der Druckkammer gehalten wird.

Als weitere Ausführungsform kann an der Innenwandung des Gehäuses eine Reibungsfläche vorgesehen sein, die den gasdurchlässigen Brennstoffkörper in Position hält. Schließlich ist es auch möglich, separate Fixierelemente, beispielsweise Federelemente, in den gasdurchlässigen Brennstoffkörper einzubringen, die sich an der Innenwand des Gehäuses abstützen und den gasdurchlässigen Brennstoffkörper in der gewünschten Position fixieren.

Alternativ kann der gasdurchlässige Brennstoffkörper auf einem Träger, beispielsweise einer Haspel, aufgebracht sein, welcher sich am Gehäuse und/oder dem Anzündergehäuse abstützt. Der Brennstoffkörper kann auch selbst eine stabile Struktur bilden, die sich am Gehäuse und/oder dem Anzündergehäuse abstützt.

Der gasdurchlässige Brennstoffkörper kann somit in der Druckkammer positioniert werden, ohne dass separate Trennelemente vorgesehen sind, die einen Aufnahmeraum für den Brennstoff in der Druckkammer abgrenzen würden.

Vorteilhafterweise kann der gasdurchlässige Brennstoffkörper vom Anzünder beabstandet innerhalb der Druckkammer vorliegen, wobei der Brennstoffkörper in einem Abstand des bis zu zweifachen, bevorzugt des 0,5- bis 1,5-fachen, und besonders bevorzugt des einfachen Innendurchmessers des Gehäuses angeordnet ist.

Gemäß einer bevorzugten Ausführungsform ist wenigstens ein Bauteil vorgesehen, welches die Druckkammer unter Bildung einer an den Anzünder angrenzenden Brennkammer abteilt und vorzugsweise die Druckkammer in die angrenzende Brennkammer und einen nur das Druckgas enthaltenden Druckkammerabschnitt unterteilt, wobei der gasdurchlässige Brennstoffkörper und wahlweise der pyrotechnische Festtreibstoff in der Brennkammer aufgenommen sind.

Die Trennung zwischen dem restlichen Druckkammerabschnitt und der Brennkammer durch das Bauteil ist jedoch nicht druckdicht, sodass ein Druckausgleich zwischen der Brennkammer und dem restlichen Druckkammerabschnitt erfolgen kann und das Druckgas mit dem gasförmigen Oxidationsmittel weiterhin in direktem Kontakt mit dem gasdurchlässigen Brennstoffkörper in der Brennkammer steht.

Bevorzugt ist das Bauteil ein Sieb, mit dem Verbrennungsrückstände aus dem Abbrand des gasdurchlässigen Brennstoffkörpers zurückgehalten werden können. Die Anordnung eines Siebs in der Druckkammer ist insbesondere dann von Vorteil, wenn der gasdurchlässige Brennstoff zusammen mit einem pyrotechnischen Festtreibstoff eingesetzt wird. In diesem Fall kann das Sieb auch als Filterelement dienen, mit dem die Rückstände aus dem Abbrand des pyrotechnischen Festtreibstoffs zurückgehalten werden können.

Das Bauteil kann ferner als Berstelement ausgebildet sein, das eine Schwächungszone aufweist, die so ausgelegt ist, dass sie bei der Aktivierung des Gasgenerators zerstört werden kann. Mit dieser Ausführung kann bei Aktivierung des Gasgenerators eine Schockwelle erzeugt werden, die sich sehr schnell durch die Druckkammer ausbreitet und eine Öffnung der Membran bewirkt. Mögliche Ausgestaltungen des Bauteils sind in der DE 10 2011 009 309 A1 im Einzelnen beschrieben, auf die Bezug genommen wird.

Besonders bevorzugt weist das Bauteil wenigstens eine Überströmöffnung auf und/oder ist so angeordnet, dass ein Druckausgleich zwischen der Brennkammer und dem durch das Bauteil abgetrennten restlichen Druckkammerabschnitt erfolgt, sodass das Druckgas auch in der Brennkammer vorliegt.

Bevorzugt nimmt die Brennkammer etwa 2 bis 50 %, besonders bevorzugt 5 bis 30% des Volumens der gesamten Druckkammer ein.

Die Brennkammer kann ganz oder teilweise mit dem gasdurchlässigen Brennstoffkörper und wahlweise dem pyrotechnischen Festtreibstoff gefüllt sein. Bevorzugt füllt der gasdurchlässige Brennstoffkörper und wahlweise der pyrotechnische Festtreibstoff das Volumen der Brennkammer zu mindestens 50 % aus, bevorzugt zu 50 bis 100 %.

Gemäß einer weiteren Ausführungsform ist der Gasgenerator so ausgelegt, dass bereits die Aktivierung des Anzünders und/oder die Öffnung einer den Anzünder von der Druckkammer trennenden Anzündermembran eine Schockwelle initiiert. Auch eine Kombination dieser Ausführungsformen ist möglich, sodass die Schockwelle vom Anzünder, von der Anzündermembran und/oder der durch das Bauteil gebildeten Berstscheibe ausgehen kann.

Bevorzugt wird zur Initiierung der Schockwelle ein Hochleistungsanzünder verwendet. Derartige Hochleistungsanzünder sind im Stand der Technik bekannt und verwenden üblicherweise eine Primärladung aus Zirkon/Kaliumperchlorat und eine Sekundärladung aus Titanhydrid/Kaliumperchlorat.

Gemäß einer weiteren Ausführungsform sind in dem Gasgenerator wenigstens zwei Druckkammerabschnitte gebildet, die jeweils druckdicht voneinander getrennt sind. Der erste Druckkammerabschnitt ist anzündernah angeordnet und enthält das Druckgas mit dem gasförmigen Oxidationsmittel und den gasdurchlässigen Brennstoffkörper, wie oben beschrieben. Ferner ist der erste Druckkammerabschnitt durch eine Membran verschlossen und druckdicht von dem zweiten Druckkammerabschnitt, und damit auch von der Umgebung des Gasgenerators, abgeschlossen. Der an den ersten Druckkammerabschnitt angrenzende zweite Druckkammerabschnitt enthält nur das Druckgas und ist durch eine zweite Membran druckdicht von der Umgebung des Gasgenerators abgeschlossen.

Das Druckgas in dem ersten und dem zweiten Druckkammerabschnitt kann die gleiche oder eine unterschiedliche Zusammensetzung aufweisen. Ferner können in dem ersten und dem zweiten Druckkammerabschnitt gleiche oder unterschiedliche Gasdrücke verwendet werden. Ist der Gasdruck im ersten Druckkammerabschnitt gleich dem Gasdruck im zweiten Druckkammerabschnitt, kann zur Abtrennung der Druckkammerabschnitte eine geklebte Membran verwendet werden. Diese Membran ist im Ruhezustand des Gasgenerators, effektiv gesehen, nicht druckbelastet.

Gegenstand der Erfindung ist auch ein Modul mit einem oben beschriebenen erfindungsgemäßen Gasgenerator, einem von dem erfindungsgemäßen Gasgenerator aufblasbaren Gassack und einer Befestigungseinrichtung zur Anbringung des Moduls an einem Fahrzeug.

Zudem ist auch Gegenstand der Erfindung ein Fahrzeugsicherheitssystem, insbesondere zum Schutz einer Person, beispielsweise eines Fahrzeuginsassen oder Passanten, mit einem oben beschriebenen erfindungsgemäßen Gasgenerator, einem von diesem aufblasbaren Gassack, als Teil eines Moduls, und einer elektronischen Steuereinheit, mittels der der erfindungsgemäße Gasgenerator bei Vorliegen einer Auslösesituation aktivierbar ist.

Weitere Merkmale und Vorteile der vorliegenden Erfindung ergeben sich aus der nachfolgenden Beschreibung bevorzugter Ausführungsformen in Verbindung mit den Zeichnungen, wobei funktionsgleiche Teile mit den gleichen Bezugszeichen versehen sind. Diese sollen jedoch nicht in einem einschränkenden Sinn verstanden werden. In den Zeichnungen zeigen:
- Figur 1 eine erste Ausführungsform des erfindungsgemäßen Gasgenerators ohne Trennelemente in der Druckkammer;
- Figur 2 eine weitere Ausführungsform des erfindungsgemäßen Gasgenerators mit umlaufender Ringnut im Gehäuse des Gasgenerators;
- Figur 3 eine Ausführungsform des erfindungsgemäßen Gasgenerators mit Trennelement in der Druckkammer;
- Figur 4 eine Ausführungsform des erfindungsgemäßen Gasgenerators mit einem in einer Brennkammer angeordneten Sieb;
- Figur 5 eine Ausführungsform des erfindungsgemäßen Gasgenerators mit einem auf einem Träger aufgewickelten Brennkörper;
- Figur 6 eine weitere Ausführungsform des erfindungsgemäßen Gasgenerators mit einem als Brennstoffspirale ausgebildeten Brennkörper;
- Figur 7 eine alternative Ausführungsform des erfindungsgemäßen Gasgenerators mit einem als Brennstoffspirale ausgebildeten Brennkörper;
- Figur 8 eine weitere Ausführungsform des erfindungsgemäßen Gasgenerators mit umlaufender Ringnut im Gasgeneratorgehäuse;
- Figur 9 eine weitere Ausführungsform des erfindungsgemäßen Gasgenerators mit umlaufender Ringnut zur Fixierung des Brennstoffkörpers;
- Figur 10 eine weitere Ausführungsform des erfindungsgemäßen Gasgenerators mit Trennelement in der Druckkammer;
- Figur 11 eine weitere Ausführungsform des erfindungsgemäßen Gasgenerators mit einem in einer Brennkammer angeordneten Sieb;
- Figur 12 die Teilansicht einer zur Erzeugung einer Schockwelle ausgelegten Ausführungsform des erfindungsgemäßen Gasgenerators;
- Figur 13 eine weitere Ausführungsform des erfindungsgemäßen Gasgenerators mit einem zusammen mit dem gasdurchlässigen Brennstoffkörper in einer Brennkammer vorliegenden pyrotechnischen Festtreibstoff;
- Figur 14 eine Ausführungsform des erfindungsgemäßen Gasgenerators mit in einer Matrix aus dem gasdurchlässigen Brennstoffkörper integrierten pyrotechnischen Festtreibstoff;
- Figur 15 eine weitere Ausführungsform des erfindungsgemäßen Gasgenerators mit in einer Matrix aus dem gasdurchlässigen Brennstoffkörper integrierten pyrotechnischen Festtreibstoff;
- Figur 16 eine Ausführungsform des erfindungsgemäßen Gasgenerators, bei dem der gasdurchlässige Brennstoffkörper als Fixierelement und/oder Volumenausgleichselement für den pyrotechnischen Festtreibstoff verwendet wird;
- Figur 17 eine Variante des erfindungsgemäßen Gasgenerators von Figur 16;
- Figur 18 eine weitere Variante des erfindungsgemäßen Gasgenerators von Figur 16;
- Figur 19 eine weitere Variante des erfindungsgemäßen Gasgenerators von Figur 16;
- Figur 20 und 20a eine weitere Ausführungsform des erfindungsgemäßen Gasgenerators mit einem zusammen mit dem gasdurchlässigen Brennstoffkörper in einer Brennkammer vorliegenden pyrotechnischen Festtreibstoff;
- Figur 21 eine weitere Ausführungsform des erfindungsgemäßen Gasgenerators mit einem zusammen mit dem gasdurchlässigen Brennstoffkörper in einer Brennkammer vorliegenden pyrotechnischen Festtreibstoff;
- Figur 22 eine Ausführungsform des erfindungsgemäßen Gasgenerators mit zwei druckdicht voneinander getrennten Druckkammerabschnitten; und
- Figur 23 a bis Figur 23c verschiedene Ausführungsformen des gasdurchlässigen Brennstoffkörpers.

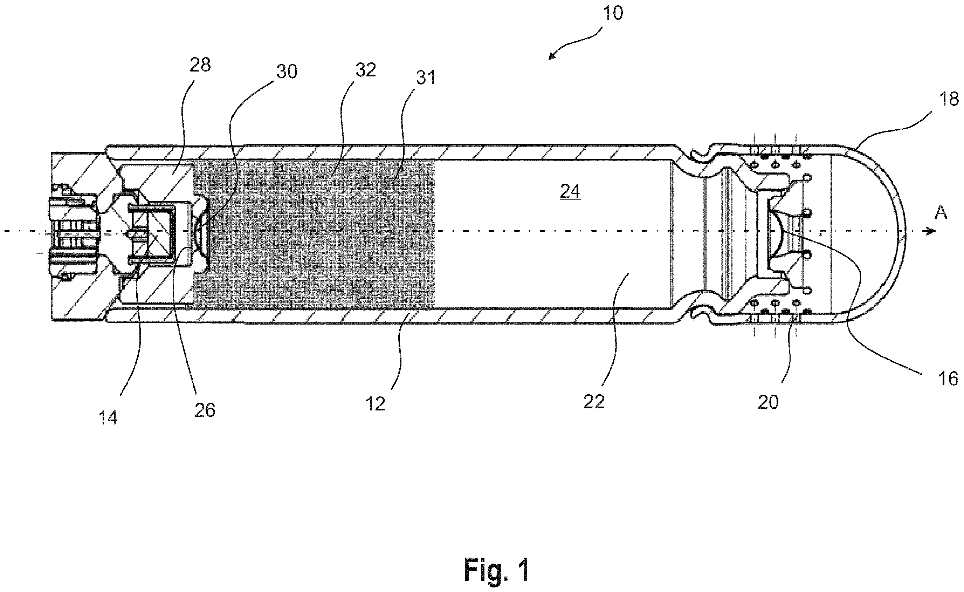

In Figur 1 ist eine erste Ausführungsform des erfindungsgemäßen Gasgenerators 10 dargestellt. Der Gasgenerator 10 weist ein langgestrecktes, zylindrisches Gehäuse 12 auf, an dessen erstem axialen Ende ein Anzünder 14 üblicher Bauart vorgesehen ist und an dessen zweitem axialen Ende das Gehäuse 12 durch eine Membran 16 gegenüber der Umgebung des Gasgenerators 10 verschlossen ist.

Das Gehäuse 12 bildet das Außengehäuse des Gasgenerators 10. Ein Diffusor 18, der auf bekannte Weise mit Ausströmöffnungen 20 versehen ist, schließt sich in axialer Richtung an das Gehäuse 12 an und leitet das aus dem Diffusor 18 ausströmende Gas zu der zu aktivierenden Sicherheitseinrichtung (nicht dargestellt).

Das Gehäuse 12 umgrenzt eine Druckkammer 22, die in axialer Richtung A an den Anzünder 14 anschließt. Die Druckkammer 22 ist mit einem komprimierten Druckgas 24 gefüllt. Das Druckgas 24 umfasst ein Inertgas, beispielsweise Argon, Helium und/oder Stickstoff oder ein anderes geeignetes Gasgemisch, und enthält außerdem ein gasförmiges Oxidationsmittel. Das gasförmige Oxidationsmittel besteht zu einem Hauptanteil (>50 mol%), vorzugsweise vollständig, aus Sauerstoff.

Die mittlere molare Masse des Druckgases 24 liegt bevorzugt zwischen 7 und 39 g/mol. Das Druckgas 24 steht in der geschlossenen Druckkammer 22 unter einem Druck von mindestens 350 bar, vorzugsweise von 350 bis 700 bar. Die Menge des Druckgases 24 ist somit ausreichend, um die mit dem Gasgenerator 10 verbundene Sicherheitseinrichtung zu aktivieren, beispielsweise einen Gassack vollständig aufzublasen.

Der Anzünder 14 ist druck- und gasdicht gegenüber der Druckkammer 22 abgetrennt. Zu diesem Zweck ist eine Öffnung 26 in einem Anzündergehäuse 28, in dem der Anzünder 14 aufgenommen ist, zur Druckkammer 22 hin mit einer Anzündermembran 30 verschlossen. Bei der Anzündermembran 30 kann es sich beispielsweise um eine Blechscheibe aus Schwarzstahl handeln.

Erfindungsgemäß ist in der Druckkammer 22 ein fester Brennstoff 31 aufgenommen. Die Druckkammer 22 weist bei der hier gezeigten Ausführungsform keine weiteren Trennvorrichtungen auf. Der feste Brennstoff 31 liegt in der Druckkammer 22 als ein aus einer oder mehreren Fasern zusammengesetzter gasdurchlässiger Brennstoffkörper 32 vor. Somit kann das Druckgas 24 die Poren des Brennstoffkörpers 32 vollständig durchdringen und das Druckgas 24 befindet sich vor einer Aktivierung des Gasgenerators 10 in einem direkten, innigen Kontakt mit dem Brennstoff 31.Der molare Anteil des gasförmigen Oxidationsmittels in dem Druckgas 24 beträgt mindestens das 1,1-fache der für eine stöchiometrische Umsetzung des Brennstoffs 31 erforderlichen Menge an Oxidationsmittel. Damit ist im Aktivierungsfall eine schnelle und vollständige Umsetzung des festen Brennstoffkörpers 32 gewährleistet. Bevorzugt beträgt der stöchiometrische Überschuss des Oxidationsmittels über den Brennstoff 31 das 2- bis 10-fache der zur Umsetzung des gasdurchlässigen Brennstoffkörpers 32 benötigten Menge.

Der gasdurchlässige Brennstoffkörper 32 ist in der hier dargestellten Ausführungsform ein aus einer oder mehreren Fasern zusammengesetzter und aus einem textilen Material aufgebauter dreidimensionaler Körper. Der gasdurchlässige Brennstoffkörper 32 kann beispielsweise aus einem Gewebe gebildet sein. Insbesondere kann der gasdurchlässige Brennstoffkörper 32 als Gewebewickel oder als Stapel mehrerer Gewebelagen ausgeführt sein, die wahlweise mit Abstandselementen versehen sein können.

Das Gewebe kann mittels dem Fachmann bekannter Bindungen aus Monofilamenten, Fäden, Garnen oder Zwirnen erhalten werden, beispielsweise mittels Leinwand-, Körper-, Atlas- oder Panamabindung sowie von diesen abgeleiteten Bindungsmustern.

Alternativ kann der gasdurchlässige Brennstoffkörper 32 auch aus jedem anderen textilen Material aufgebaut sein, beispielsweise als Maschenware, wie einem Gewirk, einem Gestrick, oder in Form einer Watte, eines Fasergeleges oder eines Vliesstoffs vorliegen.

In der hier gezeigten Ausführungsform ist der aus Fasern zusammengesetzte gasdurchlässige Brennstoffkörper 32 aus mehreren Fasern aufgebaut, die beispielweise auch zu Garnen oder Zwirnen weiterverarbeitet worden sein können. Alternativ kann der Brennstoffkörper 32 aber auch lediglich aus einer einzelnen Faser - auch als Monofil bezeichnet - aufgebaut sein, die ebenfalls zu dreidimensionalen Körpern geformt sein kann.

Als Fasern dienen in der gezeigten Ausführungsform Synthesefasern aus spinnfähigen Kunststoffen, beispielsweise aus Polyolefinen, insbesondere Polypropylen, Polyethylen, Polybutadien, und/oder Polystyrol, sowie Polyamide, Vinylpolymere, insbesondere Polyvinylacetat, Polyurethan, Polyether, Polyester, insbesondere Polyethylenterephthalat, Polytrimethylenterephthalat und Polybutylenterephthalat, Polyimide, Polyamidimid, Aramide, Polyacrylate, Polyacrylnitril, Polybenzimidazol, Polyharnstoff, Melaminharze, Polyvinylalkohol und/oder Polymethacrylat.

Alternativ können auch Naturfasern verwendet werden, beispielsweise Fasern, die aus Cellulose oder Stärke gewonnen werden, wobei diese auch chemisch nachbehandelt sein können. Solche Fasern umfassen insbesondere Zelluloseether, Zelluloseester, Zelluloseacetat, Zelluloseacetatbutyrat, Zellulosepropionat, Nitrozellulose, Phenole, Polysaccharide und Polyacetale. Grundsätzlich eigenen sich auch Wollfasern.

Die Dichte des gasdurchlässigen Brennstoffkörpers 32 liegt vorzugsweise in einem Bereich von 10 bis 90 kg/m³, vorzugsweise von 10 bis 60 kg/m³. Da die Umsetzung des aus Fasern zusammengesetzten gasdurchlässigen Brennstoffkörpers 32 mit Sauerstoff auch eine Reaktionswärme liefert, die mindestens um etwa den Faktor 8 höher ist als die Umsetzung eines typischen pyrotechnischen Festtreibstoffs, reichen bereits sehr geringe Mengen des gasdurchlässigen Brennstoffkörpers 32 aus, um die für die Erwärmung des Druckgases 24 und/oder Erzeugung eines Überdrucks in der Druckkammer 22 zur Zerstörung der Membran 16 notwendige Energie freizusetzen.

Die Stauchhärte des gasdurchlässigen Brennstoffkörpers 32 liegt vorzugsweise in einem Bereich von 2,0 bis 10 kPa. Dadurch ist es möglich, den gasdurchlässigen Brennstoffkörper 32 in das Gehäuse 12 einzupressen und in Radialrichtung zu stauchen, vorzugsweise eine Stauchung von bis zu 10 % vorzunehmen, sodass der gasdurchlässige Brennstoffkörper 32 über einen Kraftschluss in der Druckkammer 22 gehalten wird. Zusätzlich oder alternativ kann der gasdurchlässige Brennstoffkörper 32 durch Klebung oder durch Ausbildung einer Reibfläche (nicht gezeigt) im Gehäuse 12 fixiert sein.

Der Brennstoffkörper 32 füllt hier das Volumen der Druckkammer 22 zu etwa 50 % aus. Die Menge des gasdurchlässigen Brennstoffkörpers 32 in der Druckkammer 22 kann aber je nach der gewünschten Gasgeneratorleistung frei gewählt werden, beispielsweise in einem Bereich von 10 bis 95 % des Volumens der Druckkammer 22. Insbesondere kann der gasdurchlässige Brennstoffkörper 32 die Druckkammer 22 vollständig ausfüllen.

Bei der Aktivierung des Gasgenerators 10 erhält der Anzünder 14 auf bekanntem Weg ein elektrisches Signal, um diesen zu zünden. Der plötzliche Druckanstieg im Anzünder 14, der damit verbunden ist, zerstört zunächst die Anzündermembran 30. Gleichzeitig wird der gasdurchlässige Brennstoffkörper 32 in der Druckkammer 22 durch die vom Anzünder 14 freigesetzten heißen Gase und/oder Partikel erwärmt, so dass eine Umsetzung des Brennstoffs 31 mit dem in den Poren des gasdurchlässigen Brennstoffkörpers 32 enthaltenen gasförmigen Oxidationsmittel einsetzt. Die bei dieser Umsetzung auftretende Wärmeentwicklung erwärmt das Druckgas 24, so dass ein Überdruck entsteht. Durch diesen Überdruck wird die Membran 16 geöffnet und das erwärmte Druckgas 24 kann aus der Druckkammer 22 über den Diffusor 18 und die Ausströmöffnungen 20 in die Umgebung ausströmen und die Sicherheitseinrichtung betätigen.

Alternativ kann vorgesehen sein, dass die Aktivierung des Gasgenerators 10 eine Schockwelle auslöst, welche sich durch den Brennstoffkörper 32 und die Druckkammer 22 hindurch fortpflanzt und die Membran 16 sehr schnell und zuverlässig öffnet. Die Schockwelle kann von der Anzündermembran 30 oder auch vom Anzünder 14 selbst ausgehen. Der Brennstoffkörper 32 kann zur Verstärkung und/oder Steuerung der Schockwelle verwendet werden. Die Reaktionsenergie aus der anschließenden Umsetzung des gasdurchlässigen Brennstoffkörpers 32 kann zur Erwärmung des aus dem Gasgenerator 10 ausströmenden Druckgases 24 dienen. Das Druckgas 24 kann bei dieser Variante aus dem Inertgas bestehen, also frei von gasförmigem Oxidationsmittel sein. Der gasdurchlässige Brennstoffkörper 32 übernimmt dann nur die Funktion der Übertragung und/oder Verstärkung der vom Anzünder 14 erzeugten Schockwelle.

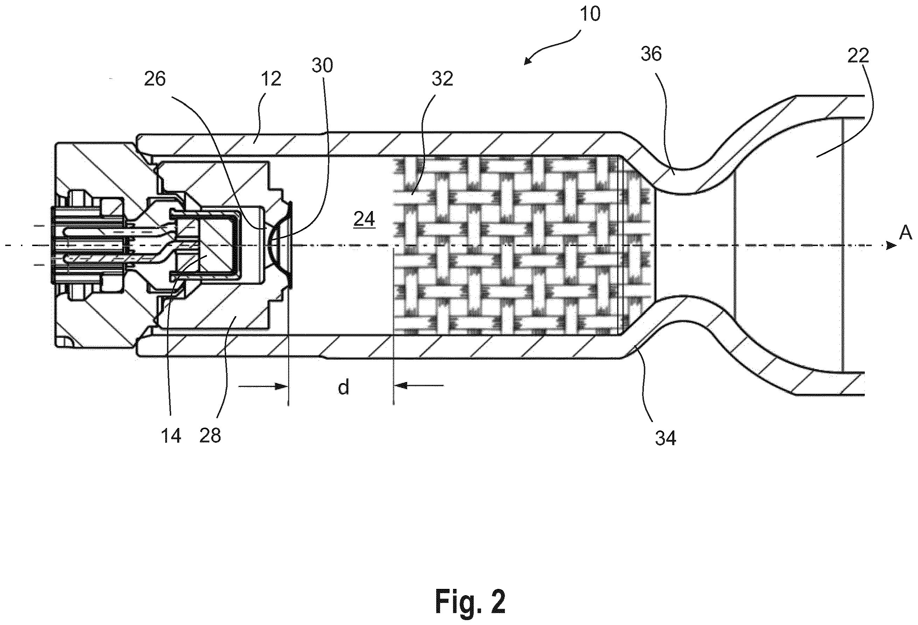

Figur 2 zeigt eine weitere Ausführungsform des erfindungsgemäßen Gasgenerators 10, bei der das Gehäuse 12 mit einer Einbuchtung 34 versehen ist, die hier in Form einer radial umlaufenden Ringnut 36 ausgebildet ist. Der gasdurchlässige Brennstoffkörper 32 erstreckt sich in diesem Fall nur bis zur Ringnut 36 und wird von dieser in der Druckkammer 22 gehalten. Somit kann die umlaufende Ringnut 36 dazu dienen, die Menge des in der Druckkammer 22 enthaltenen gasdurchlässigen Brennstoffkörpers 32 und damit die Gasgeneratorleistung anzuzeigen.

Im Übrigen entspricht der sonstige Aufbau des Gasgenerators 10 von Figur 2 dem oben in der Figur 1 gezeigten Gasgenerator 10. Für die aus Figur 1 bekannten Bestandteile des Gasgenerators 10 werden dieselben Bezugszeichen verwendet, und es wird insoweit auf die obigen Erläuterungen verwiesen.

Zwischen der Anzündermembran 30 und dem gasdurchlässigen Brennstoffkörper 32 ist in der gezeigten Ausführungsform ein Abstand d vorgesehen. Der Abstand d beträgt etwa das 0,6-fache des einfachen Innendurchmessers des Gehäuses 12. Grundsätzlich kann der Abstand d das bis zu 2-fache, bevorzugt das 0,5- bis 1,5-fache, und besonders bevorzugt das einfache des Innendurchmessers des Gehäuses 12 betragen.

Alternativ ist es auch möglich, dass der Brennstoffkörper 32 sich auch in dieser Ausführungsform bis zum Anzündergehäuse 28 erstreckt. In diesem Fall sichert die umlaufende Ringnut 36 den Brennstoffkörper 32 innerhalb der Druckkammer 22, wodurch weitere Mittel zur Fixierung des gasdurchlässigen Brennstoffkörpers 32 nicht notwendig sind.

Der gasdurchlässige Brennstoffkörper 32 kann sich jedoch auch bis hinter die durch die umlaufende Ringnut 36 gebildete Einbuchtung 34 erstrecken. Die Ringnut 36 dient auch in diesem Fall dazu, den gasdurchlässigen Brennstoffkörper 32 in der Druckkammer 22 zu halten, da der Brennstoffkörper 32 im Bereich der Ringnut 36 radial gestaucht ist und dadurch eine formund/oder kraftschlüssige Verbindung zwischen Gehäuse 12 und Brennstoffkörper 32 entsteht.

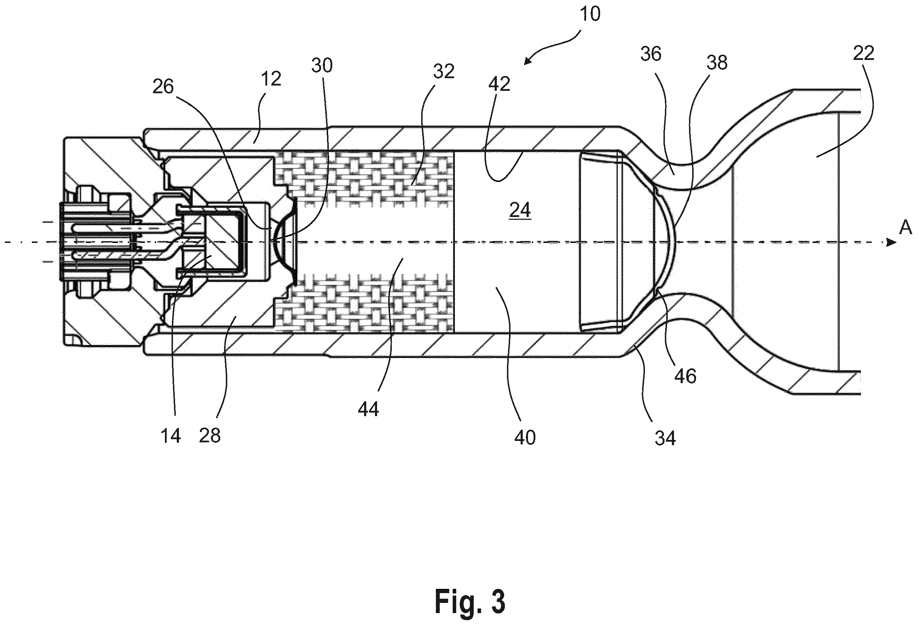

In Figur 3 ist eine Ausführungsform gezeigt, bei der das Gehäuse 12 des Gasgenerators 10 mit der umlaufenden Ringnut 36 ausgebildet ist, wobei zusätzlich zur Ausführungsform analog zu Figur 2 an der Ringnut 36 ein Berstelement 38 vorgesehen ist, welches die Druckkammer 22 unter Bildung einer an den Anzünder 14 angrenzenden Brennkammer 40 unterteilt.

Im Übrigen entspricht der sonstige Aufbau des Gasgenerators 10 von Figur 3 den oben in den Figuren 1 und 2 gezeigten Gasgeneratoren 10. Für die aus den Figuren 1 und 2 bekannten Bestandteile des Gasgenerators 10 werden dieselben Bezugszeichen verwendet, und es wird insoweit auf die obigen Erläuterungen verwiesen.

Der gasdurchlässige Brennstoffkörper 32 ist in der Brennkammer 40 aufgenommen und kann beispielsweise durch Klebung oder durch Ausbildung einer Reibfläche (hier nicht gezeigt) an einer Innenwand 42 des Gehäuses 12 festgelegt sein. Bevorzugt ist der gasdurchlässige Brennstoffkörper 32 jedoch in radialer Richtung gestaucht und somit durch Kraftschluss in dem die Brennkammer 40 abgrenzenden Abschnitt des Gehäuses 12 fixiert.

Zusätzlich weist der gasdurchlässige Brennstoffkörper 32 einen durchgehenden Hohlraum 44 auf, welcher sich in axialer Richtung des gasdurchlässigen Brennstoffkörpers 32 erstreckt. Der gasdurchlässige Brennstoffkörper 32 liegt entsprechend in Form eines Hohlzylinders vor, alternativ auch in Form mehrerer aufeinander in axialer Richtung gestapelter Hohlzylinder oder Lochscheiben aus textilen Materialien. Es können auch mehrere Hohlräume 44 innerhalb des Brennstoffkörpers 32 vorliegen. Eine solche Ausführungsform des gasdurchlässigen Brennstoffkörpers 32 eignet sich in besonderem Maße zur Erzeugung bzw. Weiterleitung einer Schockwelle.

Das Berstelement 38 kann ferner mit Schwächungszonen 46 versehen sein, die so ausgelegt sind, dass sie bei der Aktivierung des Anzünders 14 zerstört werden. Das Berstelement 38 kann so ausgelegt sein, dass es einen höheren Berstdruck aufweist als die den Gasgenerator 10 von der Umgebung abschließende Membran 16 (Figur 1).

Bei einer Aktivierung des Anzünders 14 wird zunächst die Anzündermembran 30 zerstört. Gleichzeitig wird der gasdurchlässige Brennstoffkörper 32 in der Brennkammer 40 durch die vom Anzünder 14 freigesetzten heißen Gase und/oder Partikel erwärmt, sodass eine Umsetzung des Brennstoffs mit dem in dem Druckgas 24 enthaltenen gasförmigen Oxidationsmittel einsetzt, welches den Brennstoff 31 umgibt und direkt mit dem gasdurchlässigen Brennstoffkörper 32 in Kontakt steht. Die bei dieser Umsetzung des Brennstoffs 31 mit dem Oxidationsmittel auftretende Wärmeentwicklung erwärmt das Druckgas 24 weiter, sodass ein Überdruck entsteht, welcher das Berstelement 38 unter Erzeugung oder unter Weiterleitung einer Schockwelle öffnet.

Zusätzlich oder alternativ kann bereits eine vom Anzünder 14 und/oder der Anzündermembran 30 ausgehende Schockwelle erzeugt werden, welche die Membran 16 zerstört oder schwächt. In diesem Fall liefert die Umsetzung des Brennstoffs 31 mit dem gasförmigen Oxidationsmittel in der Brennkammer 40 zusätzliche Wärmeenergie, die einer Abkühlung des aus der Druckkammer 22 ausströmenden und sich entspannenden Druckgases 24 entgegenwirkt. Des Weiteren kann aus der Umsetzung des gasdurchlässigen Brennstoffkörpers 32 mit dem gasförmigen Oxidationsmittel weiteres Heißgas zur Aktivierung der Sicherheitseinrichtung zur Verfügung gestellt werden.

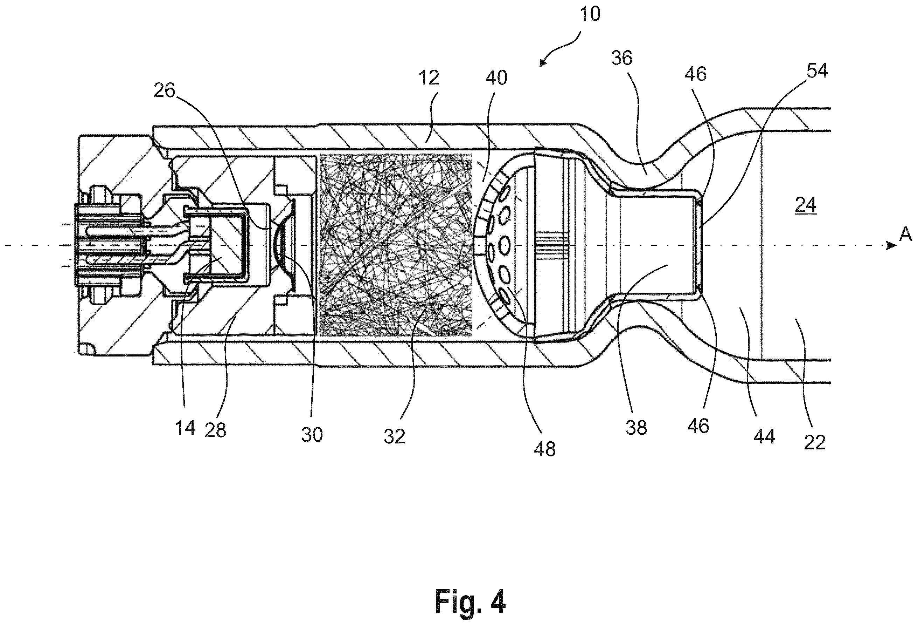

Figur 4 zeigt eine weitere Ausführungsform des erfindungsgemäßen Gasgenerators 10. Das Gehäuse 12 des Gasgenerators 10 weist hier ebenfalls die umlaufende Ringnut 36 auf. Zusätzlich ist vor dem Berstelement 38 ein Sieb 48 vorgesehen, das in der Brennkammer 40 entgegengesetzt zum Anzünder 14 angeordnet ist. Das Sieb 48 dient dazu, Verbrennungsrückstände aus dem Abbrand des gasdurchlässigen Brennstoffkörpers 32 oder des Anzünders 14 in der Brennkammer 40 zurückzuhalten.

Im Übrigen entspricht der sonstige Aufbau des Gasgenerators 10 von Figur 4 den oben in den Figuren 1 bis 3 gezeigten Gasgeneratoren 10. Für die aus den Figuren 1 bis 3 bekannten Bestandteile des Gasgenerators 10 werden dieselben Bezugszeichen verwendet, und es wird insoweit auf die obigen Erläuterungen verwiesen.

Der gasdurchlässige Brennstoffkörper 32 ist in dieser gezeigten Ausführungsform ein Vlies (Non-Woven), welches in Form eines Vollzylinders innerhalb der Brennkammer 40 angeordnet ist. Der gasdurchlässige Brennstoffkörper 32 in Form eines Vollzylinders kann beispielsweise gestanzt sein oder als Wickel vorliegen. Wenn der gasdurchlässige Brennstoffkörper 32 als Vlies ausgeführt ist, kann dieses beispielsweise durch Vernadeln, Verwirbeln oder punktuelles Verkleben mit Bindemittel verfestigt werden, wodurch die mechanische Beanspruchbarkeit des gasdurchlässigen Brennstoffkörpers 32 erhöht wird. Alternativ könnte statt eines Vlieses auch ein Gelege, eine Watte, ein Filz oder eines der in den vorherigen Ausführungsformen beschriebener Brennstoff 31 als Material für den Brennstoffkörper 32 dienen. Vliese, Filze und Watte lassen sich nach bekannten Verfahren aus Naturfasern und/oder Synthesefasern herstellen. Die Fasern können in Form von Endlosfasern, Spinnfasern begrenzter Länge, Stapelfasern oder in Form von geschnittenen Garnen vorliegen und zu einem Vlies, Filz oder einer Watte weiterverarbeitet werden.

Das zum Druckausgleich zwischen der Brennkammer 40 und dem restlichen Abschnitt der Druckkammer 22 mit Überströmöffnungen versehene Berstelement 38 ist bei der hier gezeigten Ausführungsform hutförmig gebildet. Der Deckel 54 des Berstelements 38 weist die Schwächungszonen 46 auf, die so ausgelegt sind, dass sie bei einem höheren Berstdruck reißen als die den Gasgenerator 10 von der Umgebung abschließende Membran 16 (Figur 1).

Wie in den zuvor genannten Ausführungsformen kann bei einer Aktivierung des Anzünders 14 eine Schockwelle bereits vom Anzünder selbst erzeugt werden. Zusätzlich oder alternativ dazu kann die den Anzünder 14 von der Brennkammer 40 abschließende Anzündermembran 30 so gestaltet sein, dass beim Bersten der Anzündermembran 30 eine Schockwelle ausgelöst wird.

Zusätzlich kann auch beim Öffnen des Berstelements 38 eine Schockwelle zur Öffnung der Membran 16 erzeugt werden. Die hutförmige Ausbildung des Berstelements 38 führt zu einem etwas größeren Volumen der Brennkammer 40 als das in Figur 3 gezeigte kuppelförmige Berstelement 38, wodurch eine stabilere Schockwelle erzeugt werden kann.

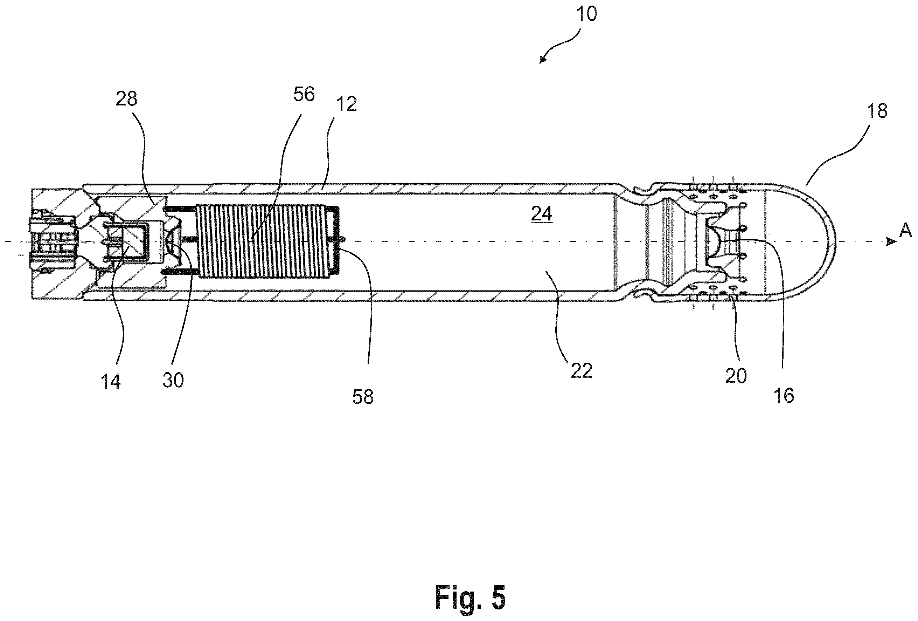

In Figur 5 ist eine alternative Ausführungsform des Gasgenerators 10 gezeigt, bei der der gasdurchlässige Brennstoffkörper 32 in Form eines Brennstofffadens 56 auf einem Träger 58 aufgewickelt ist. Der Brennstofffaden 56 kann auch als Monofil, Garn oder Zwirn vorliegen.

Im Übrigen entspricht der sonstige Aufbau des Gasgenerators 10 von Figur 5 den oben in den Figuren 1 bis 4 gezeigten Gasgeneratoren 10. Für die aus den Figuren 1 bis 4 bekannten Bestandteile des Gasgenerators 10 werden dieselben Bezugszeichen verwendet, und es wird insoweit auf die obigen Erläuterungen verwiesen.

Als Träger 58 eignet sich beispielsweise eine Haspel, auf die eine Faser, ein Faden, ein Garn und/oder ein Zwirn aufgewickelt wird, um so einen Fadenwickel als gasdurchlässigen Brennstoffkörper 32 zu formen. Der Träger 58 kann sich beispielsweise am Anzündergehäuse 28 oder am Gehäuse 12 des Gasgenerators 10 abstützen und so in seiner Position fixiert werden.

Auch in dieser Ausführungsform ist es möglich, dass das Gehäuse 12 mit einer Einbuchtung 34 versehen ist, die in Form einer radial umlaufenden Ringnut 36 ausgebildet sein kann. In diesem Fall kann sich der Träger 58 zusätzlich oder ausschließlich an der Innenwand 42 des Gehäuses 12 auf Höhe der Ringnut 36 abstützen.

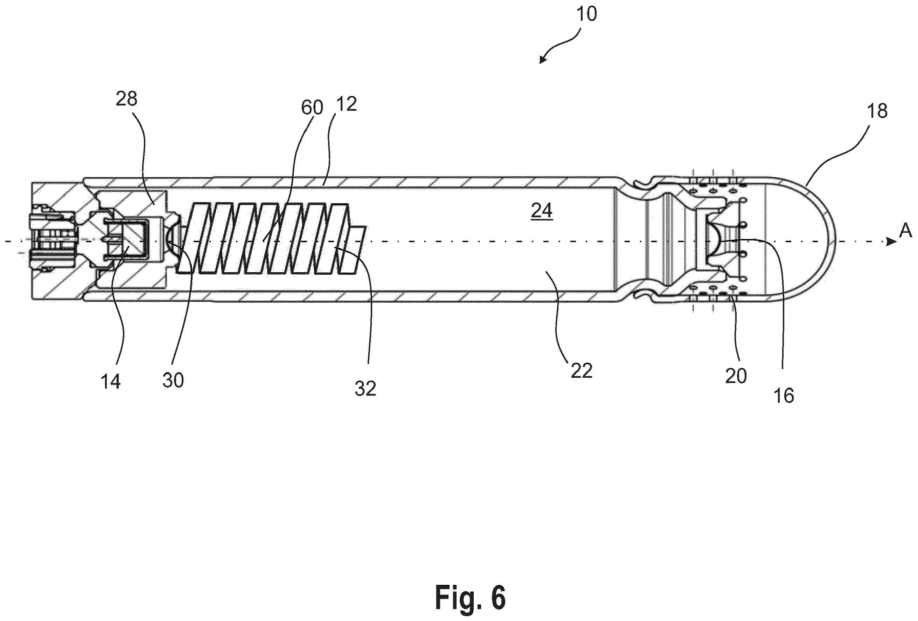

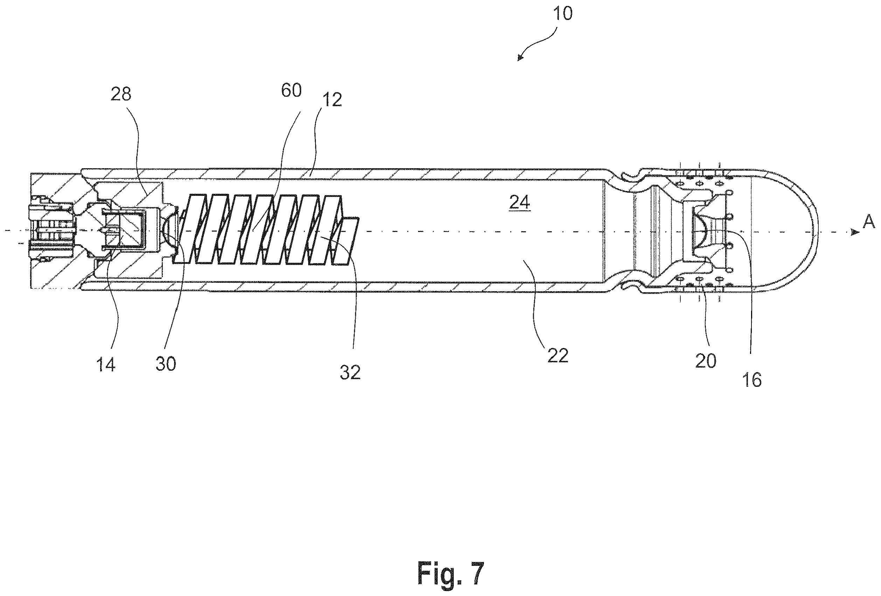

In den Figuren 6 und 7 sind weitere alternative Ausführungsformen des Gasgenerators 10 gezeigt, in denen der gasdurchlässige Brennstoffkörper 32 in Form von selbsttragenden Brennstoffspiralen 60 aus einem textilen Material vorliegt.

Im Übrigen entspricht der sonstige Aufbau des Gasgenerators 10 der Figuren 6 und 7 den oben in den Figuren 1 bis 5 gezeigten Gasgeneratoren 10. Für die aus den Figuren 1 bis 5 bekannten Bestandteile des Gasgenerators 10 werden dieselben Bezugszeichen verwendet, und es wird insoweit auf die obigen Erläuterungen verwiesen.

Wenn der gasdurchlässige Brennstoffkörper 32 in Form einer selbsttragenden textilen Brennstoffspirale 60 vorliegt, kann der Träger 58 eingespart werden. Gleichzeitig lassen sich aus Fasern zusammengesetzte Bänder als Brennstoff 31 verwenden, welche in der gewünschten Spiralform montiert werden. Über die Breite des Bandes, aus dem die Brennstoffspirale 60 geformt ist, sowie über den Abstand zweier Windungen der Brennstoffspirale 60 lässt sich die Abbrandcharakteristik des gasdurchlässigen Brennstoffkörpers 32 einstellen.

In dieser Ausführungsform ist es besonders vorteilhaft, wenn die textile Brennstoffspirale 60 aus mikroporösen Fasern zusammengesetzt ist, um die Oberfläche des gasdurchlässigen Brennstoffkörpers 32 zu vergrößern.

Wenn das Gehäuse 12 in dieser Ausführungsform mit einer Einbuchtung 34 versehen ist, die in Form einer radial umlaufenden Ringnut 36 ausgebildet sein kann, kann sich ein Ende der Brennstoffspirale 60 am Anzündergehäuse 28 und das andere Ende der Brennstoffspirale 60 an der Innenwand 42 des Gehäuses 12 auf Höhe der Ringnut 36 abstützen.

Die textile Brennstoffspirale 60 kann, wie in Figur 7 gezeigt, als doppelte Brennstoffspirale 60 ausgeführt sein. Dafür wird die Brennstoffspirale 60 am dem Anzündergehäuse 28 gegenüberliegenden Ende so gefaltet, dass eine gegenläufige zweite Spirale mit kleinerem Durchmesser innerhalb der Brennstoffspirale 60 gebildet wird.

Die Brennstoffspirale 60 kann einen zusätzlichen Träger enthalten, durch den die Form der Brennstoffspirale 60 vorgegeben und/oder stabilisiert wird. Dabei kann der Träger selbst auch eine Umsetzung mit dem Oxidationsmittel aufweisen und so zur Reaktionswärme beitragen.

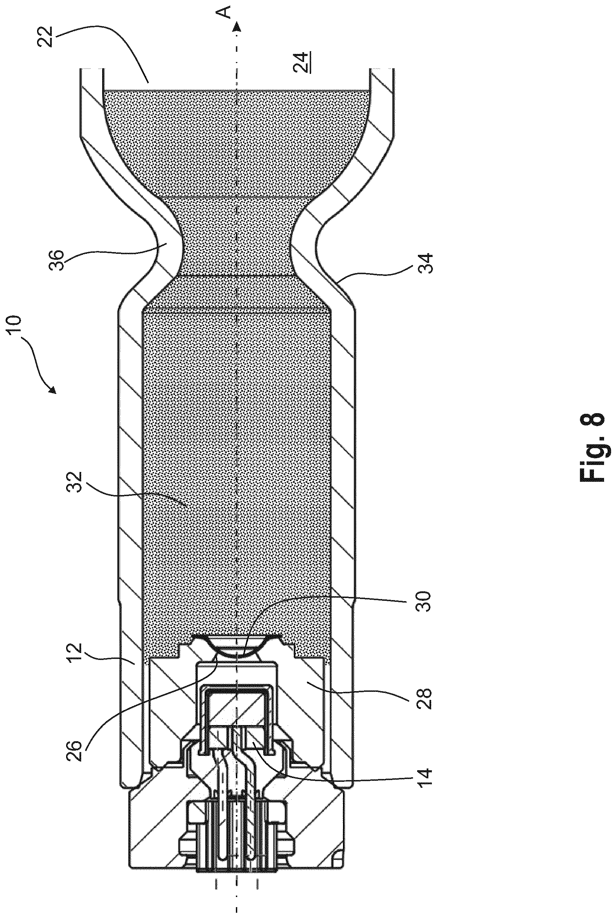

Fig. 8 zeigt eine weitere Ausführungsform des erfindungsgemäßen Gasgenerators 10, bei der das Gehäuse 12 mit einer Einbuchtung 34 versehen ist, die hier in Form einer radial umlaufenden Ringnut 36 ausgebildet ist. Der gasdurchlässige Brennstoffkörper 32 erstreckt sich bei dieser Ausführungsform in axialer Richtung A über die Ringnut 36 hinaus und kann die Druckkammer 22 ganz oder teilweise ausfüllen. Die Ringnut 36 dient in diesem Fall auch dazu, den gasdurchlässigen Brennstoffkörper 32 in der Druckkammer 22 zu halten, da der Brennstoffkörper 32 im Bereich der Ringnut 36 radial gestaucht ist und dadurch eine form- und/oder kraftschlüssige Verbindung zwischen Gehäuse 12 und Brennstoffkörper 32 entsteht.

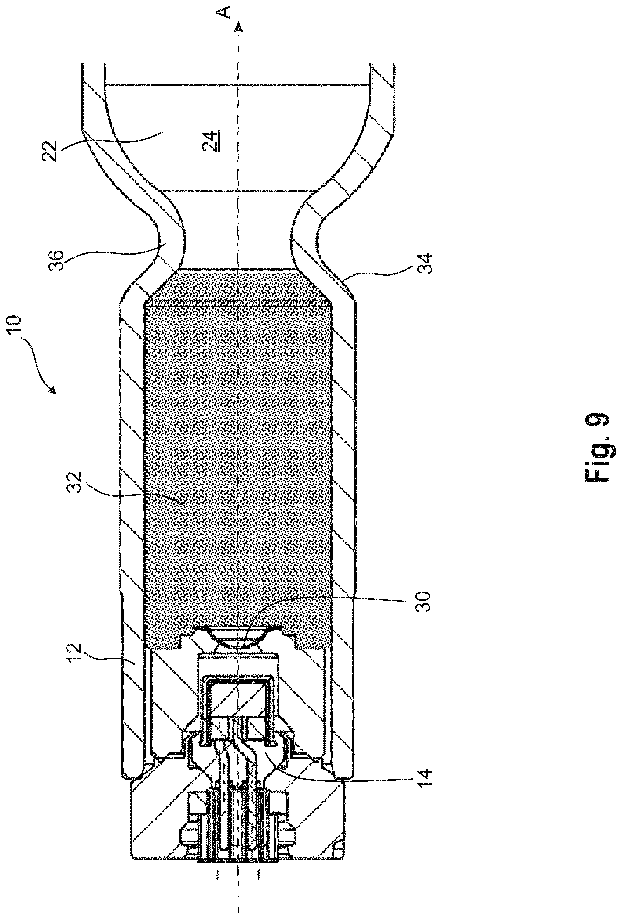

Gemäß der in Fig. 9 gezeigten Variante des Gasgenerators 10 von Fig. 1 ist das Gehäuse 12 ebenfalls mit einer radial umlaufenden Ringnut 36 versehen. Der Brennstoffkörper 32 erstreckt sich in diesem Fall nur bis zur Ringnut 36 und wird von dieser in der Druckkammer 22 gehalten. Weitere Mittel zur Fixierung des Brennstoffkörpers 32 sind bei dieser Ausführungsform somit nicht notwendig. Die umlaufende Ringnut 36 kann dazu dienen, die Menge des in der Druckkammer 22 enthaltenen Brennstoffs und damit die Gasgeneratorleistung anzuzeigen.

Im Übrigen entspricht der sonstige Aufbau des Gasgenerators 10 der Figuren 8 und 9 den oben in den Figuren 1 bis 7 gezeigten Gasgeneratoren 10. Für die aus den Figuren 1 bis 7 bekannten Bestandteile des Gasgenerators 10 werden dieselben Bezugszeichen verwendet, und es wird insoweit auf die obigen Erläuterungen verwiesen.

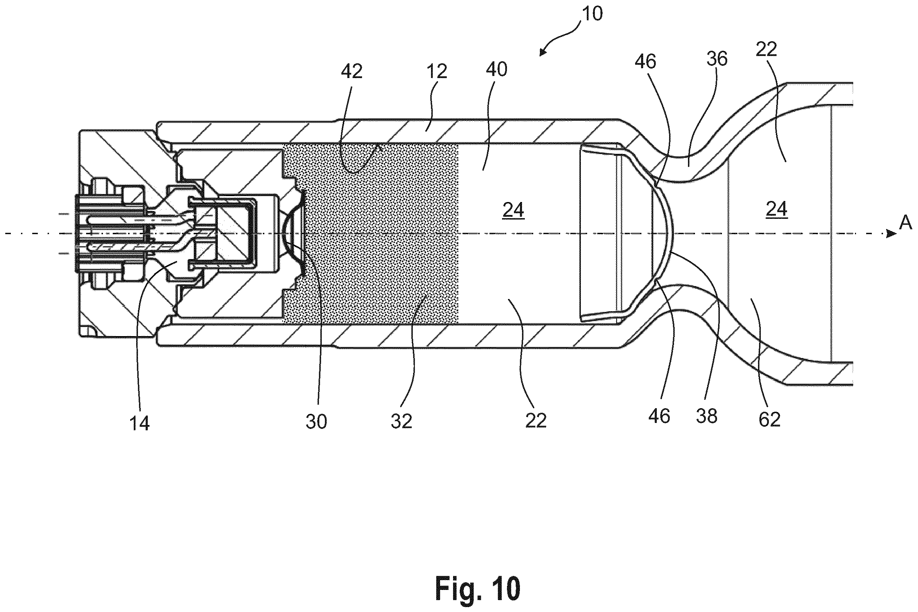

In Fig. 10 ist eine weitere Ausführungsform gezeigt, bei der das Gehäuse 12 des Gasgenerators 10 mit der umlaufenden Ringnut 36 ausgebildet ist, wobei zusätzlich zur Ausführungsform gemäß Fig. 9 an der Ringnut 36 ein Berstelement 38 vorgesehen ist, welches die Druckkammer 22 unter Bildung einer an den Anzünder 14 angrenzenden Brennkammer 40 unterteilt. Der gasdurchlässige Brennstoffkörper 32 ist in der Brennkammer 40 aufgenommen und kann beispielsweise durch Klebung oder durch Ausbildung einer Reibfläche (hier nicht gezeigt) an einer Innenwand 42 des Gehäuses 12 festgelegt sein. Bevorzugt ist der gasdurchlässige Brennstoffkörper 32 jedoch in radialer Richtung gestaucht und somit durch Kraftschluss in dem die Brennkammer 40 abgrenzenden Abschnitt des Gehäuses 12 fixiert.

Die Trennung zwischen dem nur das Druckgas mit dem gasförmigen Oxidationsmittel enthaltenden Druckkammerabschnitt 62 der Druckkammer 22 und der Brennkammer 40 durch das Berstelement 38 ist jedoch nicht druckdicht. Insbesondere können Überströmöffnungen oder Überströmkanäle (nicht gezeigt) im Berstelement 38 vorgesehen sein, die einen Druckausgleich zwischen dem Druckkammerabschnitt 62 und der Brennkammer 40 ermöglichen. Insbesondere können solche Überströmkanäle in axialer Richtung entlang eines Abschnitts des äußeren Umfangs des Berstelements 38 angebracht sein. Das Berstelement 38 kann ferner mit Schwächungszonen 46 versehen sein, die so ausgelegt sind, dass sie bei bzw. unmittelbar nach der Aktivierung des Anzünders 14 zerstört werden. Das Berstelement 38 kann so ausgelegt sein, dass es einen höheren Berstdruck aufweist als die den Gasgenerator 10 von der Umgebung abschließende Membran 16.

Im Übrigen entspricht der sonstige Aufbau des Gasgenerators 10 von Figur 10 den oben in den Figuren 1 bis 9 gezeigten Gasgeneratoren 10. Für die aus den Figuren 1 bis 7 bekannten Bestandteile des Gasgenerators 10 werden dieselben Bezugszeichen verwendet, und es wird insoweit auf die obigen Erläuterungen verwiesen.

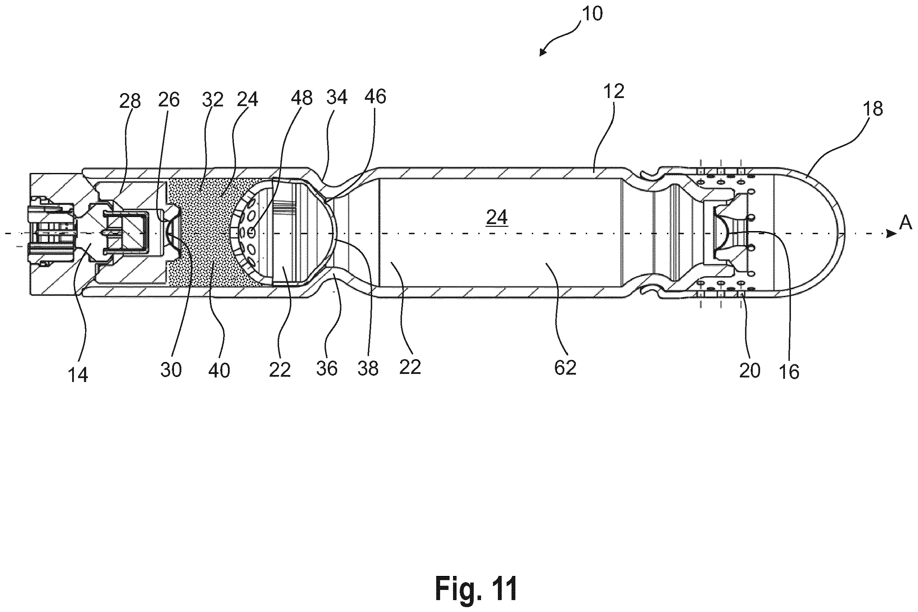

Fig. 11 zeigt eine weitere Ausführungsform des erfindungsgemäßen Gasgenerators 10. Der Gasgenerator 10 weist hier ebenfalls ein langgestrecktes, zylindrisches Gehäuse 12 auf, an dessen erstem axialen Ende ein Anzünder 14 vorgesehen ist und an dessen zweitem axialen Ende das Gehäuse 12 durch eine Membran 16 gegenüber der Umgebung des Gasgenerators 10 verschlossen ist. Ein mit Ausströmöffnungen 20 versehener Diffusor 18 schließt sich in axialer Richtung an das Gehäuse 12 an und leitet das aus dem Diffusor 18 ausströmende Gas zu der zu aktivierenden Sicherheitseinrichtung (nicht dargestellt).

Das Gehäuse 12 umgrenzt eine Druckkammer 22, die in axialer Richtung A an den Anzünder 14 anschließt. Die Druckkammer 22 ist mit einem komprimierten Druckgas 24 gefüllt. Das Druckgas 24 umfasst mindestens ein Inertgas, beispielsweise Argon, Helium und/oder Stickstoff oder ein anderes geeignetes Gasgemisch, und kann außerdem ein gasförmiges Oxidationsmittel enthalten. Das gasförmige Oxidationsmittel besteht zu einem Hauptanteil (> 50 mol%) aus Sauerstoff.

Der Anzünder 14 ist druck- und gasdicht gegenüber der Druckkammer 22 abgetrennt. Zu diesem Zweck ist eine Öffnung 26 in einem Anzündergehäuse 28, in dem der Anzünder 14 aufgenommen ist, zur Druckkammer 22 hin mit einer Anzündermembran 30 verschlossen.

Das Gehäuse 12 bildet das Außengehäuse des Gasgenerators 10 und ist mit einer umlaufenden Ringnut 36 versehen, an der ein Berstelement 38 gehalten ist. Das Berstelement 38 teilt die Druckkammer 22 unter Bildung einer in axialer Richtung A an den Anzünder 14 angrenzenden Brennkammer 40. Der gasdurchlässige Brennstoffkörper 32 ist in der Brennkammer 40 aufgenommen. Zusätzlich ist vor dem Berstelement 38 ein Sieb 48 vorgesehen, das in der Brennkammer 40 entgegengesetzt zum Anzünder 14 angeordnet ist.

Ein solcher Gasgenerator kann insbesondere dazu ausgelegt sein, dass durch die Zerstörung des Berstelements 38 eine Schockwelle ausgelöst wird, welche die Membran 16 schnell und sicher öffnet.

Alternativ zu der in Fig. 11 gezeigten Ausführungsform kann das Berstelement 38 auch entfallen. Die Brennkammer und die Druckkammer sind dann nur durch das Sieb 48 voneinander getrennt, welches an der umlaufenden Ringnut 36 festgelegt sein kann. Über das Sieb 48 wird außerdem ein Druckausgleich hergestellt, sodass der gasdurchlässige Brennstoffkörper 32 in direktem Kontakt mit dem Druckgas 24 und dem darin enthaltenen Oxidationsmittel steht.

Im Übrigen sind der gasdurchlässige Brennstoffkörper 32 und das Druckgas 24 so ausgebildet, wie im Zusammenhang mit den Figuren 1 bis 10 beschrieben.

Bei der Aktivierung des Gasgenerators 10 erhält der Anzünder 14 auf bekanntem Weg ein elektrisches Signal, um diesen zu zünden. Der plötzliche Druckanstieg im Anzünder 14, der damit verbunden ist, zerstört zunächst die Anzündermembran 30. Gleichzeitig bzw. unmittelbar danach wird der gasdurchlässige Brennstoffkörper 32 in der Brennkammer 40 durch die vom Anzünder 14 freigesetzten heißen Gase und/oder Partikel erwärmt, so dass eine Umsetzung des Brennstoffs mit dem in den Öffnungen des gasdurchlässigen Brennstoffkörpers 32 enthaltenen gasförmigen Oxidationsmittel einsetzt. Die bei dieser Umsetzung auftretende Wärmeentwicklung erwärmt das Druckgas 24, so dass ein Überdruck entsteht. Durch diesen Überdruck wird zunächst das Berstelement 38 zerstört und danach die Membran 16 schlagartig geöffnet. Das erwärmte Druckgas 24 kann dann aus der Druckkammer 22 über den Diffusor 18 und die Ausströmöffnungen 20 in die Umgebung ausströmen und die Sicherheitseinrichtung betätigen.

Die Zerstörung des Berstelements 38 kann ferner eine Schockwelle auslösen, welche sich durch den Druckkammerabschnitt 62 hindurch fortpflanzt und die Membran 16 sehr schnell öffnet.

Die Schockwelle kann auch bereits von der Anzündermembran 30 oder auch vom Anzünder 14 selbst ausgehen. Der Brennstoffkörper 32 kann dann zur Verstärkung und/oder Steuerung der Schockwelle verwendet werden. Soweit das Druckgas 24 ein gasförmiges Oxidationsmittel enthält, kann die Reaktionsenergie aus der anschließenden Umsetzung des gasdurchlässigen Brennstoffkörpers 32 zur Erwärmung des aus dem Gasgenerator 10 ausströmenden Druckgases dienen.

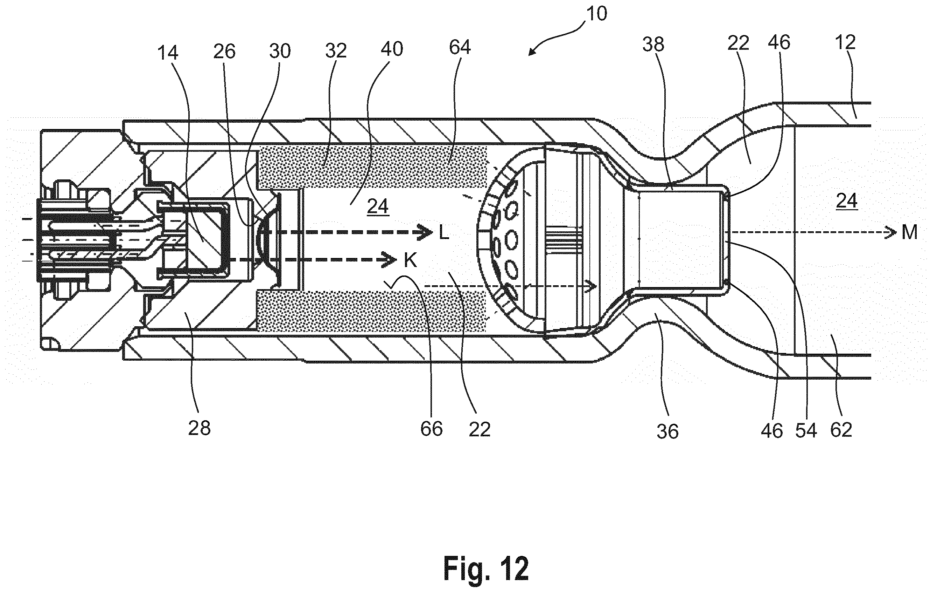

Fig. 12 zeigt eine Variante des Gasgenerators 10 von Fig. 11, der auf verschiedene Weise zur Erzeugung einer Schockwelle ausgebildet sein kann. Der in der Brennkammer 40 aufgenommene gasdurchlässige Brennstoffkörper 32 ist in Form eines Hohlzylinders 64 mit einer sich in axialer Richtung A erstreckenden durchgehenden Öffnung 66 ausgebildet. Der gasdurchlässige Brennstoffkörper 32 kann aber auch als massiver Block, also frei von Öffnungen bzw. axialen Durchgangskanälen, vorliegen oder mehr als eine durchgehende Öffnung aufweisen. Als Anzünder 14 kann ein Hochleistungsanzünder verwendet werden. Bei einer Aktivierung des Anzünders 14 kann die Schockwelle bereits vom Anzünder selbst erzeugt werden, angedeutet durch den Pfeil K. Zusätzlich oder alternativ dazu kann die den Anzünder 14 von der Brennkammer 40 abschließende Anzündermembran 30 so gestaltet sein, dass beim Bersten der Anzündermembran 30 eine Schockwelle ausgelöst wird, die durch den Pfeil L bezeichnet ist.

Das zum Druckausgleich zwischen der Brennkammer 40 und dem restlichen Druckkammerabschnitt 62 der Druckkammer 22 mit Überströmöffnungen versehene Berstelement 38 ist bei der hier gezeigten Ausführungsform hutförmig gebildet. Der Deckel des Berstelements 38 weist die Schwächungszonen 46 auf, die so ausgelegt sind, dass sie bei einem höheren Berstdruck reißen als die den Gasgenerator 10 von der Umgebung abschließende Membran 16 (Fig. 11). Auch beim Öffnen des Berstelements 38 kann somit eine Schockwelle zur Öffnung der Membran 16 erzeugt werden, hier angedeutet durch den Pfeil M. Die hutförmige Ausbildung des Berstelements 38 führt zu einem etwas größeren Volumen der Brennkammer 40 als das in Fig. 11 gezeigte kuppelförmige Berstelement 38, wodurch eine stabilere Schockwelle erzeugt werden kann.

Bei einer Aktivierung des Anzünders 14 wird zunächst die Anzündermembran 30 zerstört. Gleichzeitig bzw. unmittelbar danach wird der gasdurchlässige Brennstoffkörper 32 in der Brennkammer 40 durch die vom Anzünder 14 freigesetzten heißen Gase und/oder Partikel erwärmt, sodass eine Umsetzung des Brennstoffs 31 mit dem in dem Druckgas 24 enthaltenen gasförmigen Oxidationsmittel einsetzt, welches den Brennstoff 31 umgibt und direkt mit dem gasdurchlässigen Brennstoffkörper 32 in Kontakt steht. Die bei dieser Umsetzung des Brennstoffs 31 mit dem Oxidationsmittel auftretende Wärmeentwicklung erwärmt das Druckgas 24 weiter, sodass ein Überdruck entsteht, welcher das Berstelement 38 unter Erzeugung einer Schockwelle öffnet. Die Schockwelle pflanzt sich mit sehr hoher Geschwindigkeit in der Druckkammer 22 und im Druckkammerabschnitt 62 fort und öffnet unmittelbar die Membran (Fig. 11). Das Druckgas 24 strömt sodann über die Ausströmöffnungen 20 im Diffusor 18 zu der zu aktivierenden Sicherheitseinrichtung.

Zusätzlich oder alternativ kann bereits eine vom Anzünder 14 und/oder der Anzündermembran 30 ausgehende Schockwelle erzeugt werden, welche die Membran 16 zerstört oder schwächt. In diesem Fall liefert die Umsetzung des Brennstoffs 31 mit dem gasförmigen Oxidationsmittel in der Brennkammer 40 zusätzliche Wärmeenergie, die einer Abkühlung des aus der Druckkammer 22 ausströmenden und sich entspannenden Druckgases 24 entgegenwirkt. Des Weiteren kann aus der Umsetzung des gasdurchlässigen Brennstoffkörpers 32 mit dem gasförmigen Oxidationsmittel weiteres Heißgas zur Aktivierung der Sicherheitseinrichtung zur Verfügung gestellt werden.

Im Übrigen entspricht der sonstige Aufbau des Gasgenerators 10 der Figuren 11 und 12 den oben in den Figuren 1 bis 10 gezeigten Gasgeneratoren 10. Für die aus den Figuren 1 bis 10 bekannten Bestandteile des Gasgenerators 10 werden dieselben Bezugszeichen verwendet, und es wird insoweit auf die obigen Erläuterungen verwiesen.

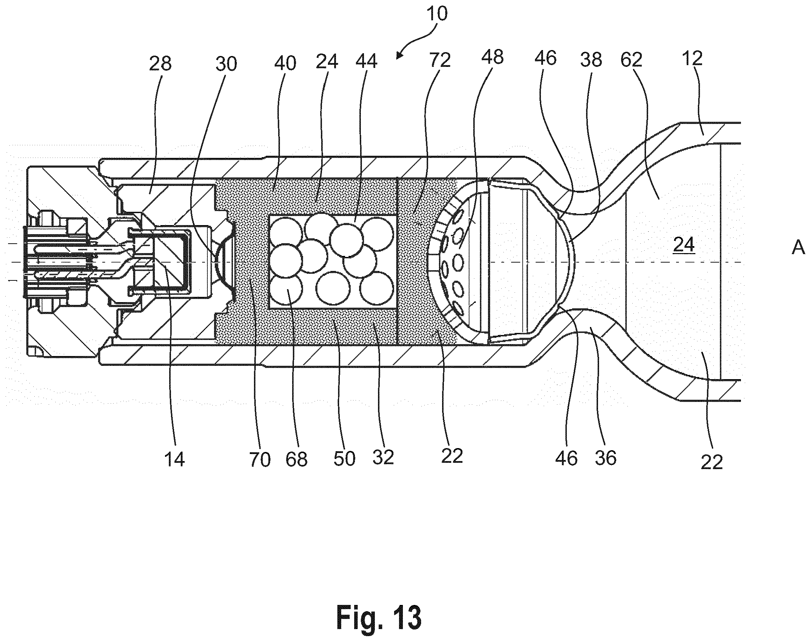

Fig. 13 zeigt eine weitere Ausführungsform, bei der ein gasdurchlässiger Brennstoffkörper 32 und ein pyrotechnischer Festtreibstoff 68 gemeinsam in der Brennkammer 40 vorliegen. Der gasdurchlässige Brennstoffkörper 32 ist hier so angeordnet, dass in dem Brennstoffkörper 32 ein Hohlraum 44 entsteht, in dem der pyrotechnische Festtreibstoff 68 aufgenommen ist. Insbesondere ist der gasdurchlässige Brennstoffkörper 32 in Form eines Hohlzylinders gebildet, dessen freie Enden jeweils mit einem wahlweise an den Hohlzylinder angeformten Deckel 70 bzw. 72 abgeschlossen sind, wobei die Deckel 70 und 72 ebenfalls aus dem gasdurchlässigen Brennstoffkörpers 32 bestehen. Auch bei dieser Ausführungsform können das Sieb 48 und/oder das Berstelement 38 entfallen. Der als Hohlzylinder ausgebildete gasdurchlässige Brennstoffkörper 32 kann form- oder kraftschlüssig an dem Gehäuse 12 anliegen, oder sich bis zur Ringnut 36 erstrecken und so in der Druckkammer 22 fixiert sein.

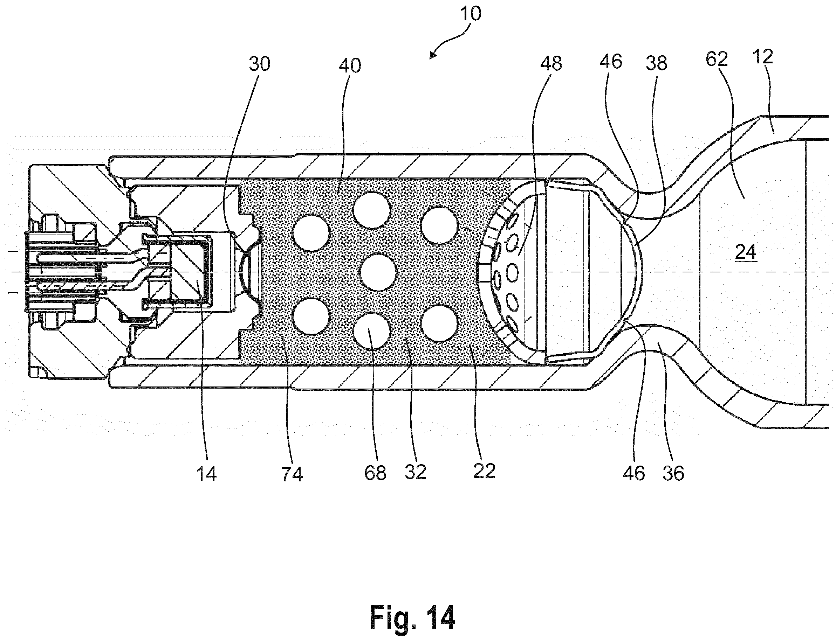

Bei der Ausführungsform gemäß Fig. 14 bildet der in die Brennkammer 40 eingebrachte gasdurchlässige Brennstoffkörper 32 eine Matrix 74, in die der pyrotechnische Festtreibstoff 68 integriert ist. Anstelle des pyrotechnischen Festtreibstoffs 68 kann bei dieser Ausführungsform auch vorgesehen sein, dass ein Metallpulver oder andere Metallkörper, beispielsweise in Drahtform, Folienform oder in anderer stückiger Form in die Matrix 74 aus dem gasdurchlässigen Brennstoffkörper 32 integriert sind.

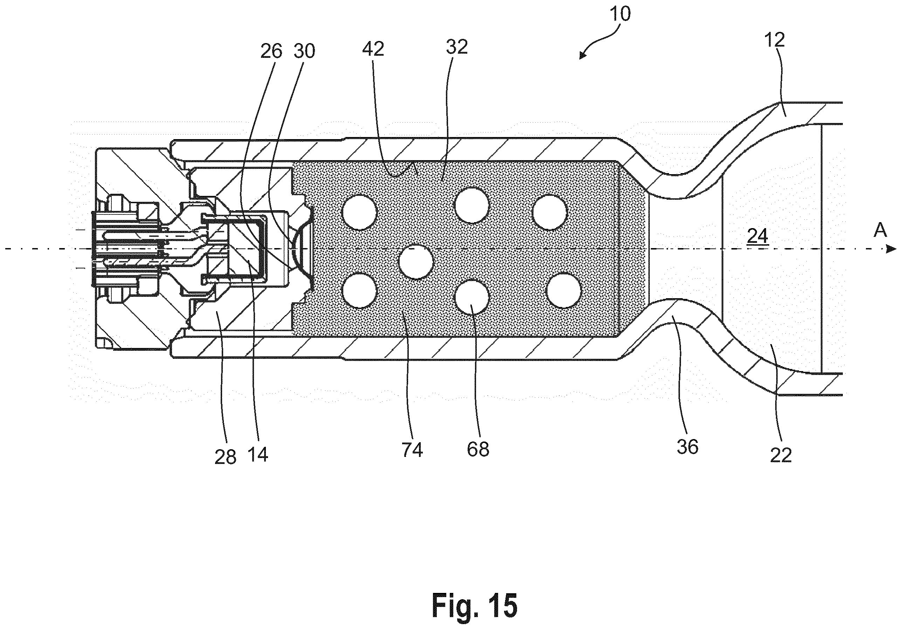

Der gasdurchlässige Brennstoffkörper 32 bildet somit bei dieser Ausführungsform zusammen mit dem pyrotechnischen Festtreibstoff 68 und/oder den metallischen Einlagerungen ein Verbundmaterial, das besonders einfach zu handhaben ist. Insbesondere kann der Verbund aus dem in der Matrix 74 aus dem gasdurchlässigen Brennstoffkörper 32 verteilten pyrotechnischen Festtreibstoff 68 auf einfache Weise über die Ringnut 36 in der Druckkammer 22 gehalten werden. Durch Verzicht auf das Sieb 48 und/oder das Berstelement 38 ist somit eine besonders einfache Ausgestaltung des Gasgenerators 10 möglich. Eine solche Variante ist in Fig. 15 dargestellt.

Über den Anteil des in der Matrix 74 aus dem gasdurchlässigen Brennstoffkörper 32 verteilten pyrotechnischen Festtreibstoffs 68 kann die Gasgeneratorleistung in weitem Umfang variiert werden.

Im Übrigen entspricht der sonstige Aufbau des Gasgenerators 10 der Figuren 13 bis 15 den oben in den Figuren 1 bis 12 gezeigten Gasgeneratoren 10. Für die aus den Figuren 1 bis 12 bekannten Bestandteile des Gasgenerators 10 werden dieselben Bezugszeichen verwendet, und es wird insoweit auf die obigen Erläuterungen verwiesen.

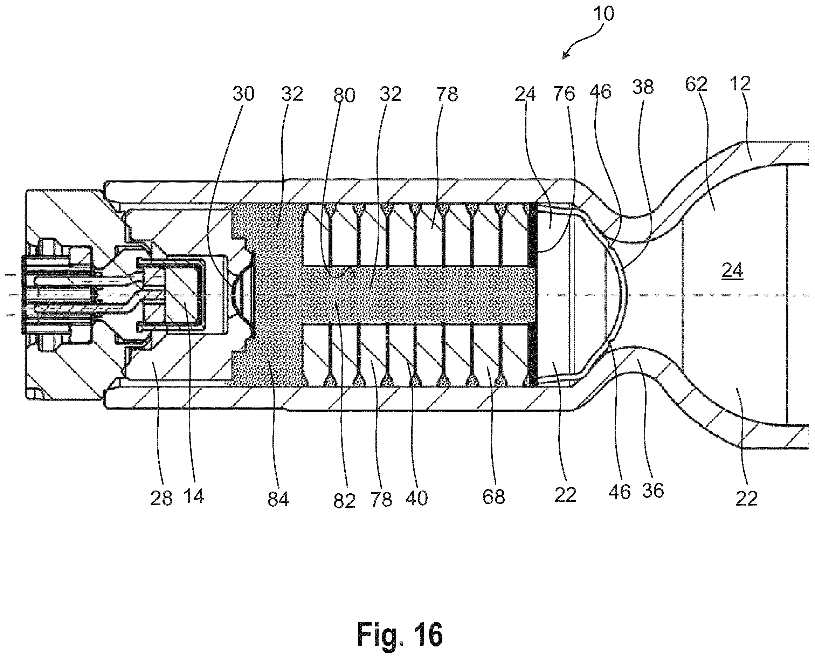

Gemäß der in Fig. 16 gezeigten Ausführungsform weist der Gasgenerator 10 eine durch das Berstelement 38 von einem Druckkammerabschnitt 62 der Druckkammer 22 getrennte Brennkammer 40 auf, wobei das Berstelement 38 jedoch Überströmöffungen aufweist, so dass der Druckkammerabschnitt 62 und die Brennkammer 40 in Strömungsverbindung miteinander stehen. Diese Überströmöffnungen sind nicht im Detail gezeigt, sie können beispielsweise in axialer Richtung entlang des Außenumfangs des Berstelements 38 verlaufen. Alternativ oder zusätzlich dazu ist es auch möglich, dass das Berstelement 38, beispielsweise im Bereich seines kappenförmigen Endes, einzelne materialdurchgängige Öffnungen (nicht dargestellt) mit geringem Durchmesser aufweist. Solche Öffnungen sind in ihrer Anzahl und Größe so gering zu halten, dass eine gewünschte Ausbildung einer Schockwelle durch ein Öffnen des Berstelements 38 nicht beeinträchtigt wird. Zusätzlich zum Berstelement 38 ist ein Filter 76 auf der dem Anzünder 14 entgegengesetzten Seite der Brennkammer 40 vorgesehen, der sich am Berstelement 38 abstützt. Der pyrotechnische Festtreibstoff 68 ist in der Brennkammer 40 aufgenommen und liegt als Formkörper in Form von übereinander gestapelten Treibstoffringen 78 vor, die eine zentrale Bohrung 80 aufweisen. In axialer Richtung werden die Treibstoffringe 78 von dem Filter 76 in der Brennkammer 40 gehalten.

Der gasdurchlässige Brennstoffkörper 32 weist einen zylindrischen Abschnitt 82 auf, der in die zentrale Bohrung 80 der Treibstoffringe 78 aus dem pyrotechnischen Festtreibstoff 68 eingreift. Somit dient der gasdurchlässige Brennstoffkörper 32 bei der hier gezeigten Ausführungsform auch zur Fixierung des pyrotechnischen Festtreibstoffs 68 in der Brennkammer 40. Gleichzeitig kann der gasdurchlässige Brennstoffkörper 32 auch die Funktion einer Verstärkerladung übernehmen.

Darüber hinaus kann der gasdurchlässige Brennstoffkörper 32 zum Volumenausgleich ein scheibenförmiges Basiselement 84 aufweisen, das anzünderseitig in der Brennkammer 40 angeordnet und einstückig mit dem in die zentrale Bohrung 80 der Treibstoffringe 78 eingreifenden zylindrischen Abschnitt 82 ausgebildet sein kann. Alternativ kann das Basiselement 84 getrennt von dem zylindrischen Abschnitt 82 als separater Volumenausgleichskörper in die Brennkammer 40 eingebracht werden. Das Basiselement 84 kann teilweise zusammengepresst sein und dadurch in axialer Richtung einen Druck auf die Treibstoffringe 78 ausüben, so dass Rasselgeräusche vermieden werden. Über die Dicke des scheibenförmigen Basiselements 84 in axialer Richtung kann ein Volumenausgleich in der Brennkammer 40 bereitgestellt werden. Somit kann über den gasdurchlässigen Brennstoffkörper 32 auch die Gasgeneratorleistung angepasst werden.

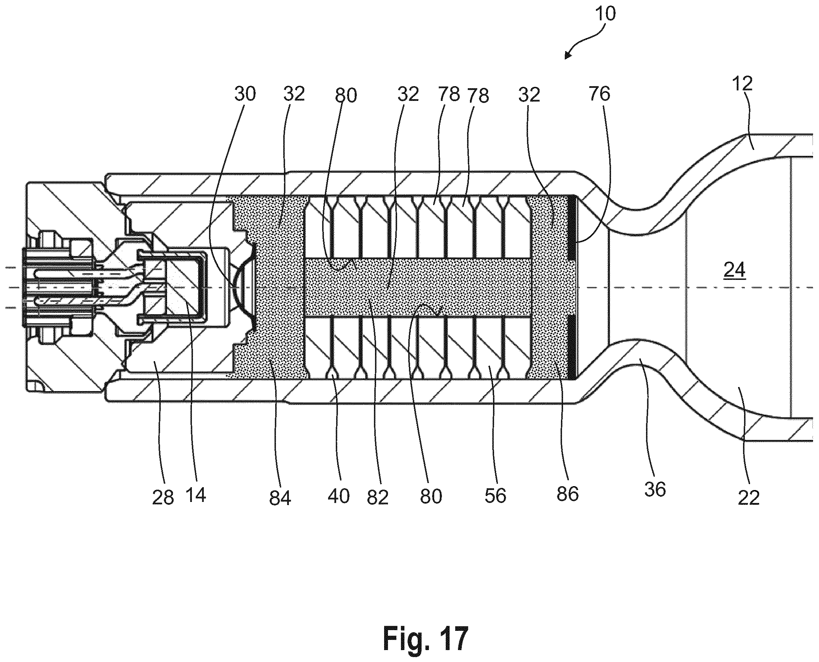

Eine Variante der in Fig. 16 gezeigten Ausführungsform ist in Fig. 17 dargestellt. Die in der Brennkammer 40 angeordneten Treibstoffringe 78 aus dem pyrotechnischen Festtreibstoff 68 sind ebenfalls übereinander gestapelt und mit einer zentralen Bohrung 80 versehen. Der gasdurchlässige Brennstoffkörper 32 ist hier wenigstens dreiteilig gebildet und weist den zylindrischen Abschnitt 82 auf, der in die zentrale Bohrung 80 der Treibstoffringe 78 eingreift. Der zylindrische Abschnitt 82 fixiert somit die Treibstoffringe 78 in der Brennkammer 40. Ferner umfasst der gasdurchlässige Brennstoffköper 32 das anzünderseitig angeordnete, scheibenförmige Basiselement 84, das einen Volumenausgleich in der Brennkammer 40 bereitstellt. Schließlich umfasst der gasdurchlässige Brennstoffkörper 32 noch einen Deckel 86, der auf der entgegengesetzten Seite des scheibenförmigen Basiselements 84 vorgesehen und auf die Treibstoffringe 78 aufgelegt ist. Der Deckel 86 liegt an dem Filter 76 an, der seinerseits durch die in das Gehäuse 12 eingebrachte Ringnut 36 in der Druckkammer 22 gehalten wird und die Druckkammer 22 unter Bildung der Brennkammer 40 abteilt. Bei der in Fig. 17 gezeigten Ausführungsform ist somit kein die Brennkammer 40 abschließendes Berstelement 38 vorgesehen. Der Stapel aus den Treibstoffringen 78 des pyrotechnischen Festtreibstoffs 68 wird von dem Filter 76 und dem Deckel 86 des gasdurchlässigen Brennstoffkörpers 32 in axialer Richtung in der Brennkammer 40 fixiert. Somit sind auch bei dieser Ausführungsform keine zusätzlichen Haltelemente notwendig, die den pyrotechnischen Festtreibstoff 68 und den gasdurchlässigen Brennstoffkörper 32 in der Brennkammer 40 festlegen. Wie zuvor beschrieben können der zylindrische Abschnitt 82 des gasdurchlässigen Brennstoffkörpers 32 und entweder das Basiselement 84 und/oder der Deckel 86 auch einstückig miteinander gebildet sein.

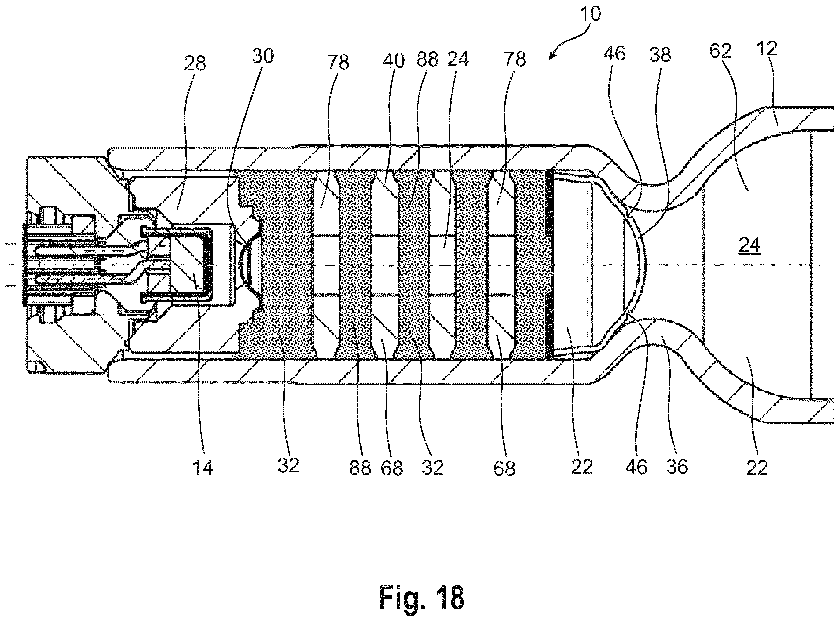

Fig. 18 zeigt eine weitere Variante des in Fig. 16 dargestellten Gasgenerators 10, bei der aus dem pyrotechnischen Festtreibstoff 68 Treibstoffringe 78, oder andere scheibenförmige Elemente, mit oder ohne Bohrungen, und aus dem Brennstoffkörper 32 gebildete Scheibenkörper 88 in axialer Richtung abwechselnd übereinander gestapelt sind. Auch in diesem Fall können die Scheibenkörper 88 aus dem Brennstoffkörper 32 eine unterschiedliche Dicke aufweisen und als Volumenausgleichsmittel und/oder zur Anpassung der Gasgeneratorleistung dienen. Ferner können die aus dem Brennstoffkörper 32 gebildeten Scheibenkörper 88 eine oder mehrere Durchgangslöcher aufweisen. Wie oben beschrieben, kann das in Fig. 18 gezeigte Berstelement 38 entfallen, oder es kann zusätzlich zum Berstelement 38 und/oder zum Filter 76 ein Sieb 48 vorgesehen sein.

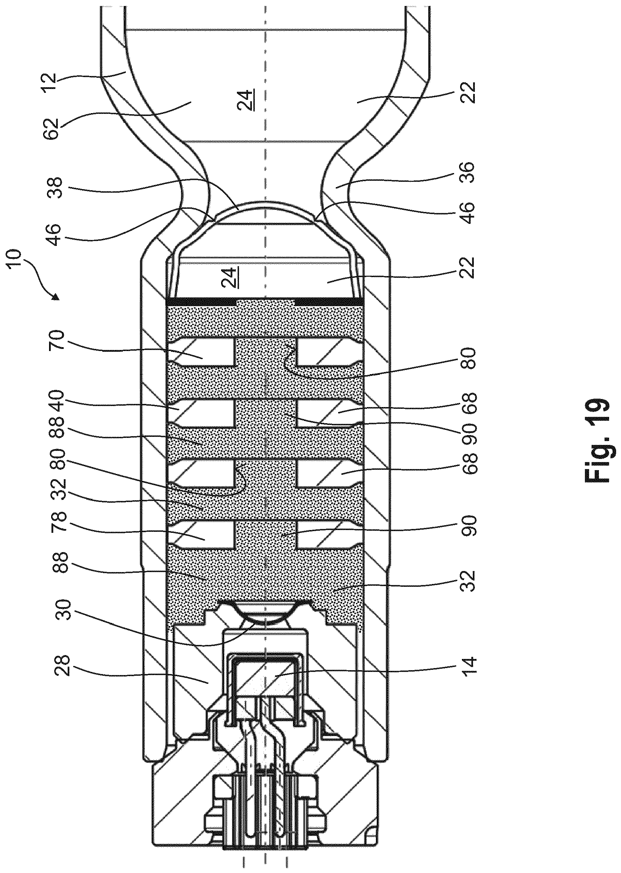

Gemäß einer weiteren Variante, die in Fig. 19 dargestellt ist, können die aus dem Brennstoffkörper 32 gebildeten Scheibenkörper 88 mit einem axialen Vorsprung 90 versehen sein, der in die Bohrung 80 eingreift, die in den Treibstoffringen 78 aus dem pyrotechnischen Festtreibstoff 68 vorgesehen ist. Weitere Abwandlungen dieser Ausführungsform sind möglich. So kann der pyrotechnische Festtreibstoff 68 beispielsweise in Form von Scheiben mit mehreren Durchgangslöchern vorliegen, und der gasdurchlässige Brennstoffkörper 32 kann eine korrespondierende Form mit einem oder mehreren Vorsprüngen aufweisen, die jeweils in die Durchgangslöcher eingreifen. Auf diese Weise ist eine besonders stabile Fixierung des pyrotechnischen Festtreibstoffs 68 in der Brennkammer 40 möglich.

Im Übrigen entspricht der sonstige Aufbau des Gasgenerators 10 der Figuren 16 bis 19 den oben in den Figuren 1 bis 15 gezeigten Gasgeneratoren 10. Für die aus den Figuren 1 bis 15 bekannten Bestandteile des Gasgenerators 10 werden dieselben Bezugszeichen verwendet, und es wird insoweit auf die obigen Erläuterungen verwiesen.

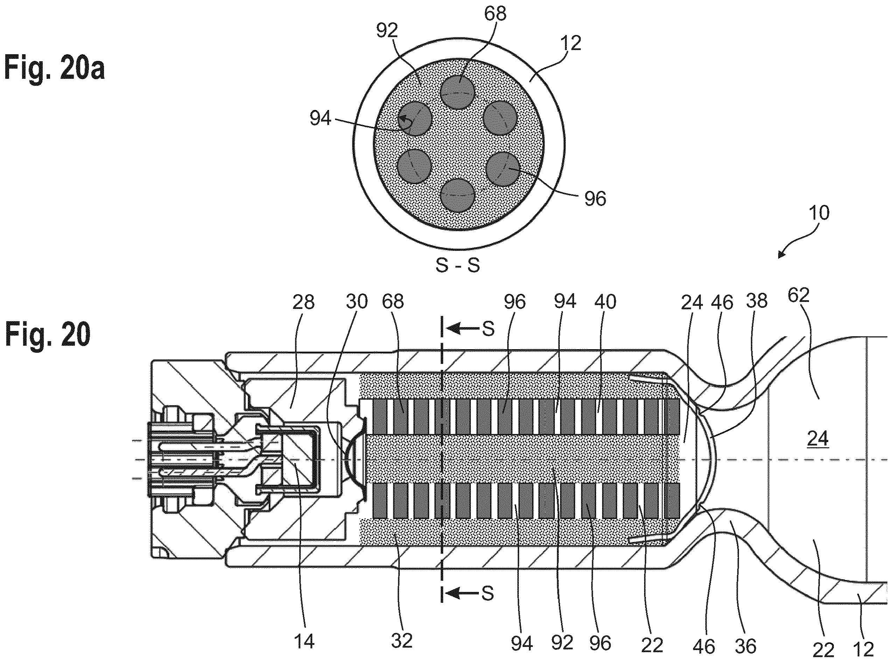

Die Ausführungsform von Fig. 20 und 20a zeigt einen erfindungsgemäßen Gasgenerator 10, bei dem die Druckkammer 22 durch das Berstelement 38 von der Brennkammer abgeteilt ist, wobei das Berstelement 38 mit Überströmöffungen (nicht gezeigt) versehen ist, so dass die Druckkammer 22 und die Brennkammer 40 in Strömungsverbindung miteinander stehen. Der in der Brennkammer 40 angeordnete gasdurchlässige Brennstoffkörper 32 liegt als monolithischer Block in Form eines zylindrischen Körpers 92 vor, der mit axial durchgehenden Bohrungen 94 versehen ist. Der pyrotechnische Festtreibstoff 68 ist in den axialen Bohrungen 94 im gasdurchlässigen Brennstoffkörper 32 aufgenommen. Bei der hier gezeigten Ausführungsform ist der pyrotechnische Festtreibstoff 68 in Form von Treibstofftabletten 96 gebildet, deren Durchmesser dem Durchmesser der axialen Bohrungen 94 im gasdurchlässigen Brennstoffkörper 32 entspricht oder geringfügig, bis zu 10 %, größer ist. Es kann auch vorgesehen sein, die axialen Bohrungen 94 mit einem Granulat oder anderen Formen des pyrotechnischen Festtreibstoffs 68 zu füllen. In diesem Fall sind zusätzliche Abdeckungen an dem zylindrischen Körper 92 vorgesehen (nicht gezeigt). Anstelle des Berstelements 38 kann ein Sieb 48 oder ein Filter 76 (nicht gezeigt) vorgesehen sein, der den mit pyrotechnischem Festtreibstoff 68 gefüllten gasdurchlässigen Brennstoffkörper 32 in der Brennkammer 40 hält. Weiter kann der zylindrische Körper 92 aus dem Brennstoff 31 an einem oder beiden Enden mit einem Deckel aus dem Brennstoff 31 verschlossen sein, der dann wiederum einen Volumenausgleich in der Brennkammer 40 bereitstellen kann.

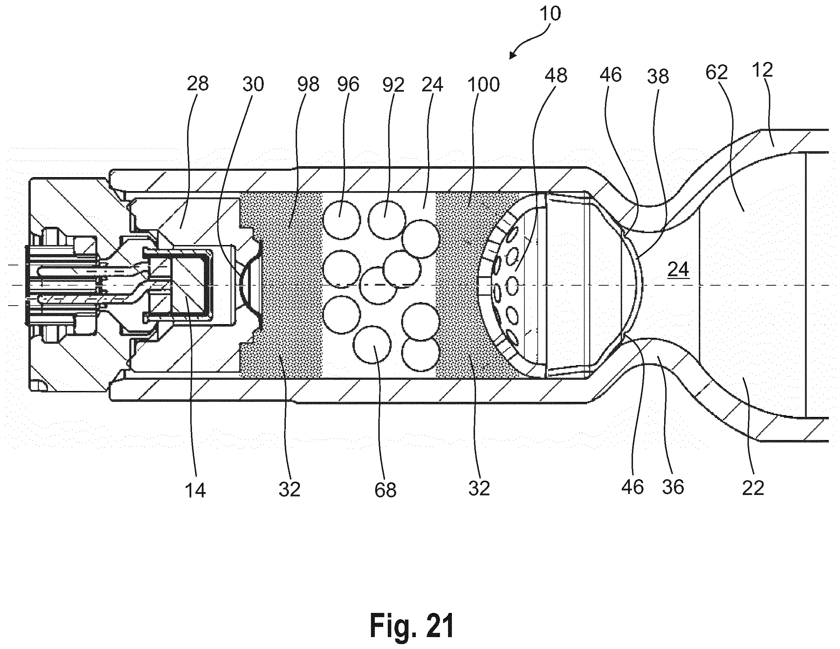

Bei der in Fig. 21 gezeigten Ausführungsform des erfindungsgemäßen Gasgenerators liegt der pyrotechnische Festtreibstoff 68 in Form einer Schüttung aus Treibstofftabletten 96 in der Brennkammer 40 vor. Anstelle von Treibstofftabletten 96 kann die Schüttung auch aus Pulver, Granulat oder anderen Formkörpern zusammengesetzt sein. Die Brennkammer 40 wird durch das Berstelement 38 von der Druckkammer 22 abgeteilt. Das Berstelement 38 ist so gestaltet, dass auch vor der Aktivierung des Gasgenerators 10 ein Druckausgleich zwischen Druckkammer 22 und Brennkammer 40 erfolgt. Vor dem Berstelement 38 befindet sich ein Sieb 48, das die beim Abbrand des pyrotechnischen Festtreibstoffs 68 oder die beim Öffnen der Anzündermembran 30 entstehenden Partikel in der Brennkammer 40 zurückhalten kann. Der gasdurchlässige Brennstoffkörper 32 umfasst zwei Lagen 98, 100, mit denen die Treibstoffschüttung aus dem pyrotechnischen Festtreibstoff 68 abgedeckt ist. Die aus dem Brennstoff 31 gebildeten Lagen 98, 100 sind in axialer Richtung auf entgegengesetzten Seiten der Treibstoffschüttung angeordnet und dienen somit als Volumenausgleichselement in der Brennkammer 40 und zur Verhinderung von Rasselgeräuschen.

Im Übrigen entspricht der sonstige Aufbau des Gasgenerators 10 der Figuren 20 und 21 den oben in den Figuren 1 bis 19 gezeigten Gasgeneratoren 10. Für die aus den Figuren 1 bis 19 bekannten Bestandteile des Gasgenerators 10 werden dieselben Bezugszeichen verwendet, und es wird insoweit auf die obigen Erläuterungen verwiesen.

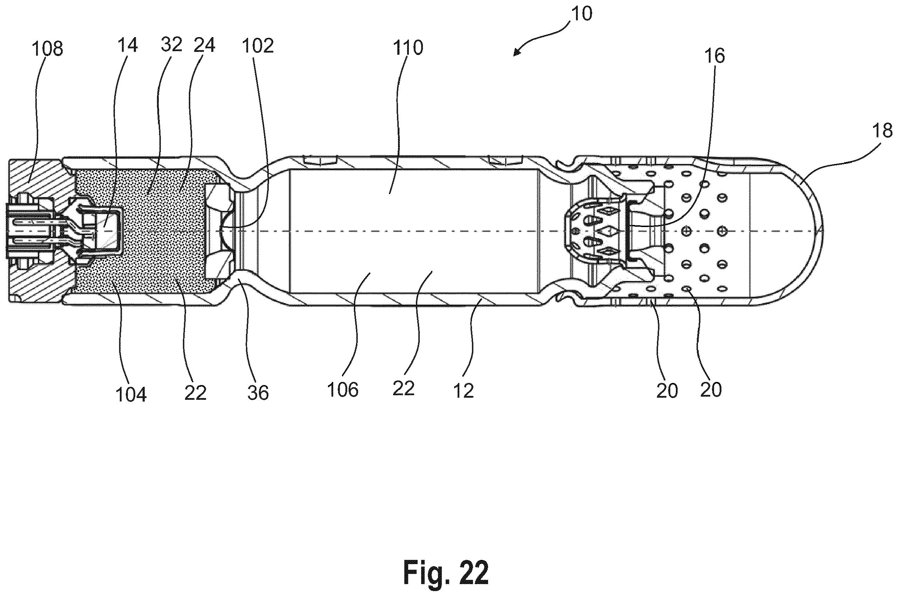

Die in Fig. 22 dargestellte Ausführungsform zeigt einen Gasgenerator 10, bei dem die Druckkammer 22 über eine weitere Membran 102 in zwei druckdicht voneinander getrennte Druckkammerabschnitte 104 und 106 unterteilt ist. Die Druckkammerabschnitte 104 und 106 können somit auch als eine erste und eine zweite Druckkammer angesehen werden

Das rohrförmige Gehäuse 12 umschließt beide Druckkammerabschnitte 104 und 106 und weist an seinem ersten axialen Ende einen Anzünder 14 sowie an seinem zweiten axialen Ende eine Membran 16 auf, die den Gasgenerator gegenüber der Umgebung abschließt. Ein mit Ausströmöffnungen 20 versehener Diffusor 18 schließt sich in axialer Richtung an das Gehäuse 12 an und leitet aus der Druckkammer 22 ausströmendes Gas zu der zu aktivierenden Sicherheitseinrichtung (nicht dargestellt) weiter. Der Diffusor 18 ist an dem axialen Ende des Gehäuses 12 vorgesehen, an dem sich auch die Membran 16 befindet.

Der anzünderseitig in dem Gehäuse 12 angeordnete erste Druckkammerabschnitt 104 erstreckt sich in axialer Richtung von einer mit einer Aufnahme für den Anzünder 14 versehenen Grundplatte 108 bis zu der im Gehäuse 12 radial umlaufenden Ringnut 36, an der die weitere Membran 102 festgelegt ist. Die weitere Membran 102 dichtet den ersten Druckkammerabschnitt 104 gas- und druckdicht von dem zweiten, sich in axialer Richtung anschließenden Druckkammerabschnitt 106 ab. Der Anzünder 14 ist ebenfalls druckdicht in der Grundplatte 108 aufgenommen.

Der erste Druckkammerabschnitt 104 enthält als einzigen Brennstoff 31 einen gasdurchlässigen Brennstoffkörper 32 sowie ein Druckgas 24 mit einem gasförmigen Oxidationsmittel zur Umsetzung des Brennstoffs 31 unter Bildung von Wärmeenergie, wobei der molare Anteil des gasförmigen Oxidationsmittels in dem Druckgas mindestens das 1,1-fache der für eine stöchiometrische Umsetzung des Brennstoffs 31 erforderlichen Menge an Oxidationsmittel beträgt. Zusätzlich kann das Druckgas 24 in dem ersten Druckkammerabschnitt 104 auch ein Inertgas wie Helium, Argon oder Stickstoff enthalten.

Das Druckgas 110 im zweiten Druckkammerabschnitt 106 besteht bevorzugt aus einem Inertgas oder einem Inertgasgemisch, ohne gasförmiges Oxidationsmittel. Der zweite Druckkammerabschnitt 106 enthält auch keinen gasdurchlässigen Brennstoffkörper 32 oder sonstigen pyrotechnischen Festtreibstoff 68.

Der Gasdruck in den beiden, aneinander angrenzenden Druckkammerabschnitten 104 und 106 liegt vorzugsweise in einem Bereich von 350 bis 700 bar und ist vorzugsweise gleich, sodass die weitere Membran 102 zwischen den Druckkammerabschnitten 104, 106 keine Druckfestigkeit aufweisen muss, da sie im Ruhezustand des Gasgenerators 10, effektiv gesehen, nicht druckbelastet ist.

Bei einer Aktivierung des Anzünders 14 wird der gasdurchlässige Brennstoffkörper 32 in dem ersten Druckkammerabschnitt 104 durch die vom Anzünder 14 freigesetzten heißen Gase und/oder Partikel erwärmt, sodass eine Umsetzung mit dem ebenfalls in dem ersten Druckkammerabschnitt 104 vorliegenden gasförmigen Oxidationsmittel erfolgt. Die bei dieser Umsetzung entstehende Wärmeenergie führt zu einem Überdruck in dem ersten Druckkammerabschnitt 104, sodass die Membran 102 zwischen dem ersten und dem zweiten Druckkammerabschnitt 104, 106 sowie daran anschließend auch die Membran 16 am entgegensetzten Ende des zweiten Druckkammerabschnitts 106 geöffnet wird. Das Druckgas 24 und 110 kann dann aus der Druckkammer 22 austreten und über die Ausströmöffnungen 20 zu der zu aktivierenden Sicherheitseinrichtung geleitet werden.

Im Übrigen entspricht der sonstige Aufbau des Gasgenerators 10 von Figur 22 den oben in den Figuren 1 bis 21 gezeigten Gasgeneratoren 10. Für die aus den Figuren 1 bis 21 bekannten Bestandteile des Gasgenerators 10 werden dieselben Bezugszeichen verwendet, und es wird insoweit auf die obigen Erläuterungen verwiesen.

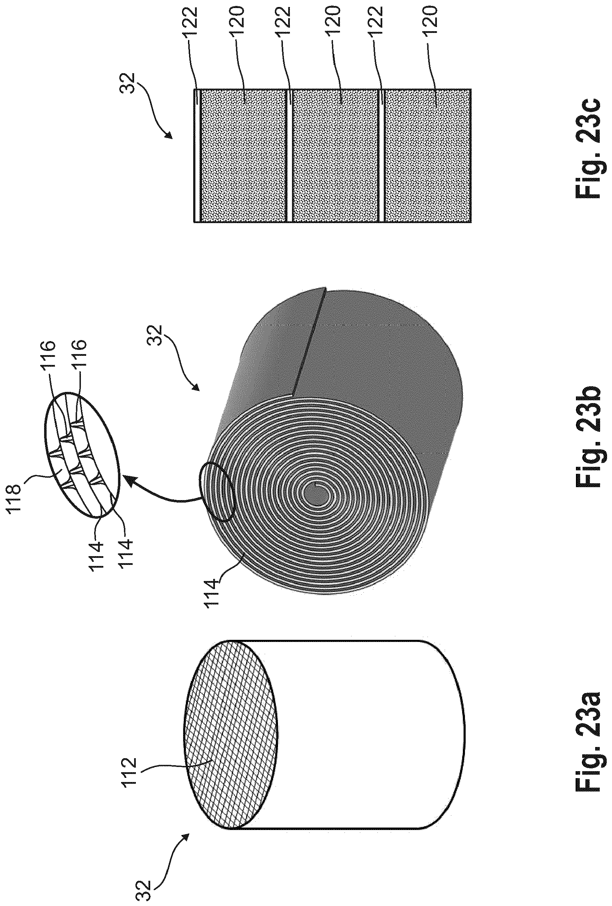

Weitere Ausgestaltungen des gasdurchlässigen Brennstoffkörpers 32 sind in den Fig. 23a bis 23c gezeigt. Fig. 23a zeigt einen gasdurchlässigen Brennstoffkörper 32, der eine Wabenstruktur mit durchgehenden Hohlräumen 112 aufweist, die im Wesentlichen parallel zueinander verlaufen. Die Hohlräume 112 bilden Kanäle, in die das gasförmige Oxidationsmittel eintreten kann.

Fig. 23b zeigt einen gasdurchlässigen Brennstoffkörper 32 in Form einer Rolle, wobei die aufgerollten textilen Lagen 114 durch Abstandselemente 116 voneinander getrennt sind, so dass durchgehende Hohlräume 118 in der Rolle entstehen. Die textilen Lagen 114 selbst können eine Dicke von 5 bis 200 µm aufweisen. Die Höhe der Abstandselemente 116 beträgt vorzugsweise das 3- bis 5-fache der Dicke der Lagen 114. Das im Druckgas 24 enthaltene gasförmige Oxidationsmittel kann in die durch die Abstandselemente 116 zwischen den Lagen 114 gebildeten Hohlräume 118 eindringen und steht somit in engem, direktem Kontakt mit den Lagen 114. Die Abstandselemente 116 sind jedoch als optional zu betrachten. In anderen Worten ausgedrückt, sind bei einer solchen alternativen Ausführungsform (nicht dargestellt) keine Abstandselemente 116 notwendig bzw. vorhanden, da sich durch einen entsprechenden geometrischen Aufbau der textilen Lagen 114 in Form eines Gewebes, eines Gewirkes, eines Gestrickes, eines Vlieses oder eines Geleges die Hohlräume 118 quasi automatisch ergeben.

Fig. 23c zeigt einen gasdurchlässigen Brennstoffkörper 32, der übereinander gestapelte textile Lagen 120 aufweist, die jeweils von einer textilen Zwischenlage 122 aus einem im Vergleich zu den textilen Lagen 120 unterschiedlich schnell abbrennendem Material bestehen, das mit dem gasförmigen Oxidationsmittel umgesetzt werden kann. Da die textilen Lagen 122 schneller oder langsamer abbrennen als der gasdurchlässige Brennstoffkörper 32, kann mit dieser Anordnung die Abbrandgeschwindigkeit des gasdurchlässigen Brennstoffkörpers 32 weiter gesteuert werden.

Die vorstehend beschriebenen Ausführungsformen des erfindungsgemäßen Gasgenerators sind nur als Beispiele und keinesfalls in einem einschränkenden Sinn zu verstehen. Erfindungsgemäße Abwandlungen und Variationen der beschriebenen Ausführungsformen ergeben sich für den Fachmann beim Lesen dieser Beschreibung, ohne von dem in den beigefügten Ansprüchen definierten Umfang der Erfindung abzuweichen.

## Patentansprüche

1. Gasgenerator, insbesondere für eine Sicherheitseinrichtung in Fahrzeugen, mit
einer mit Druckgas (24) gefüllten Druckkammer (22), die durch eine Membran (16) von einer Umgebung des Gasgenerators (10) abgeschlossen ist, wobei das Druckgas (24) ein gasförmiges Oxidationsmittel enthält, das zu einem Hauptanteil aus Sauerstoff besteht;
einem in der Druckkammer (22) aufgenommenen festen Brennstoff (31), wobei das Druckgas (24) vor einer Aktivierung des Gasgenerators (10) in direktem Kontakt mit dem Brennstoff (31) steht; und
einem druckdicht von der Druckkammer (22) getrennten Anzünder (14), durch den bei Aktivierung des Gasgenerators (10) eine Umsetzung des gasförmigen Oxidationsmittels mit dem festen Brennstoff (31) unter Wärmeentwicklung auslösbar ist;
wobei der Brennstoff (31) in Form eines gasdurchlässigen Brennstoffkörpers (32) vorliegt und der molare Anteil des gasförmigen Oxidationsmittels in dem Druckgas (24) mindestens das 1,1-fache der für eine stöchiometrische Umsetzung des gasdurchlässigen Brennstoffkörpers (32) erforderlichen Menge an Oxidationsmittel beträgt, **dadurch gekennzeichnet, dass**
der Brennstoff (31) in Form eines aus einer oder mehreren Fasern zusammengesetzten gasdurchlässigen Brennstoffkörpers (32) vorliegt, wobei der gasdurchlässige Brennstoffkörper (32) aus einem textilen Material aufgebaut ist, in dem die eine oder mehreren Fasern enthalten sind, wobei das textile Material aus der aus einem Gewebe, einem Gewirk, einem Gestrick, einem Vlies, einem Gelege, einem Filz oder einer Watte und Kombinationen davon bestehenden Gruppe ausgewählt ist, und
wobei die eine oder mehreren Fasern Naturfasern und/oder Synthesefasern sind, wobei die Naturfasern pflanzliche Fasern oder tierische Fasern und die Synthesefasern aus einem spinnfähigen Kunststoff sind.

2. Gasgenerator nach Anspruch 1, **dadurch gekennzeichnet, dass** das gasförmige Oxidationsmittel Sauerstoff und weitere gasförmige Oxidationsmittel umfasst, und bevorzugt einen molaren Anteil von mindestens 60 % an Sauerstoff aufweist.

3. Gasgenerator nach Anspruch 1 oder 2, **dadurch gekennzeichnet, dass** die eine oder mehreren Fasern Cellulosefasern oder Stärkefasern sind.

4. Gasgenerator nach einem der vorhergehenden Ansprüche, **dadurch gekennzeichnet, dass** die eine oder mehreren Fasern zu Fäden versponnen und/oder zu Garnen und/oder Zwirnen verdreht sind, und bevorzugt zu einem textilen Flächengebilde und/oder einem dreidimensionalen Faserkörper weiterverarbeitet sind.

5. Gasgenerator nach einem der vorhergehenden Ansprüche, **dadurch gekennzeichnet, dass** der gasdurchlässige Brennstoffkörper (32) in Form eines zylindrischen Körpers, eines Wickels oder einer Spirale ausgebildet ist.

6. Gasgenerator nach einem der vorhergehenden Ansprüche, **dadurch gekennzeichnet, dass** der Brennstoff (31) in Form eines oder mehrerer Fäden vorliegt, und dass der gasdurchlässige Brennstoffkörper (32) einen Träger (58) umfasst, bevorzugt eine Haspel, auf dem der oder die Faden aufgewickelt sind.

7. Gasgenerator nach einem der vorhergehenden Ansprüche, **dadurch gekennzeichnet, dass** der gasdurchlässige Brennstoffkörper (32) mindestens 3% des Volumens der Druckkammer (22) ausfüllt, vorzugsweise 3 bis 95%, besonders bevorzugt 5 bis 50% des Volumens der Druckkammer (22).

8. Gasgenerator nach einem der vorhergehenden Ansprüche, **dadurch gekennzeichnet, dass** die Druckkammer (22) zusätzlich zum gasdurchlässigen Brennstoffkörper (32) einen in der Druckkammer (22) aufgenommenen pyrotechnischen Festtreibstoff enthält, wobei insbesondere der gasdurchlässige Brennstoffkörper (32) wenigstens in Form eines Hohlzylinders vorliegt, in den der pyrotechnische Festtreibstoff eingebracht ist.

9. Gasgenerator nach einem der vorhergehenden Ansprüche, **dadurch gekennzeichnet, dass** der gasdurchlässige Brennstoffkörper (32) vom Anzünder (14) beabstandet innerhalb der Druckkammer (22) vorliegt, wobei der Brennstoffkörper (32) in einem Abstand des bis zu zweifachen, bevorzugt des 0,5- bis 1,5-fachen, und besonders bevorzugt des einfachen Innendurchmessers des Gehäuses (12) angeordnet ist.

10. Gasgenerator nach einem der vorhergehenden Ansprüche, **dadurch gekennzeichnet, dass** ein Bauteil vorgesehen ist, welches die Druckkammer (22) unter Bildung einer an den Anzünder (14) angrenzenden Brennkammer (40) abteilt, wobei der gasdurchlässige Brennstoffkörper (32) und wahlweise der pyrotechnische Festtreibstoff in der Brennkammer (40) aufgenommen ist.

11. Gasgenerator nach Anspruch 10, **dadurch gekennzeichnet, dass** die Brennkammer (40) etwa 2 bis 50 %, besonders bevorzugt 5 bis 30 % des Volumens der Druckkammer (22) einnimmt.

12. Gasgenerator nach einem der vorhergehenden Ansprüche, **dadurch gekennzeichnet, dass** bei Aktivierung des Gasgenerators (10) wenigstens eine Schockwelle auftritt, die wenigstens abschnittsweise durch die Druckkammer (22) propagierbar ist, um eine Zerstörung der Membran (16) zu bewirken.

13. Modul mit einem Gasgenerator (10), einem von dem Gasgenerator (10) aufblasbaren Gassack und einer Befestigungseinrichtung zur Anbringung des Moduls an einem Fahrzeug, **dadurch gekennzeichnet, dass** der Gasgenerator nach zumindest einem der Ansprüche 1 bis 12 ausgebildet ist.

14. Fahrzeugsicherheitssystem, insbesondere zum Schutz einer Person, beispielsweise eines Fahrzeuginsassen oder Passanten, mit einem Gasgenerator (10), einem von diesem aufblasbaren Gassack, als Teil eines Moduls, und einer elektronischen Steuereinheit, mittels der der Gasgenerator (10) bei Vorliegen einer Auslösesituation aktivierbar ist, **dadurch gekennzeichnet, dass** der Gasgenerator (10) nach zumindest einem der voranstehenden Ansprüche 1 bis 12 ausgebildet ist.

## Claims

1. A gas generator, in particular for a safety device in vehicles, comprising
a pressure chamber (22) which is filled with compressed gas (24) and which is closed off an environment of the gas generator (10) via a membrane (16), the compressed gas (24) containing a gaseous oxidant which is predominantly composed of oxygen;
a solid fuel (31) received in the pressure chamber (22), wherein the compressed gas (24) is in direct contact with the fuel (31) before the gas generator (10) is activated; and
an igniter (14) separated pressure-tightly from the pressure chamber (22) by which, when the gas generator (10) is activated, a conversion of the gaseous oxidant with the solid fuel (31) can be triggered with heat being generated;
wherein the fuel (31) is provided in the form of a gas-permeable fuel body (32) and the molar fraction of the gaseous oxidant in the compressed gas (24) is at least 1.1 times the amount of oxidant required for a stoichiometric conversion of the gas-permeable fuel body (32), **characterized in that**
the fuel (31) is in the form of of a gas-permeable fuel body (32) which is composed of one or more threads, wherein the gas-permeable fuel body (32) is made from a textile material in which the one or more fibers are contained, and wherein the textile material is selected from the group consisting of a fabric, a knitted fabric, a knit, a non-woven, a felt, a laid fabric or a wadding, or a combination thereof, and
wherein the one or more fibers are natural fibers and/or synthetic fibers, wherein the natural fibers are plant or animal originating fibers, and wherein the synthetic fibers are from spinnable resin.

2. The gas generator according to claim 1, **characterized in that** the gaseous oxidant comprises oxygen and further gaseous oxidants, and preferably has a molar fraction of at least 60 % of oxygen.

3. The gas generator according to claim 1 or 2, **characterized in that** the one or more fibers are cellulose fibers or starch fibers.

4. The gas generator according to any one of the preceding claims, **characterized in that** the one or more fibers are spun into threads and/or are twisted into yarns and/or twists and preferably are further processed into a textile fabric and/or a three-dimensional fiber body.

5. The gas generator according to any one of the preceding claims, **characterized in that** the gas-permeable fuel body (32) is in the form of a cylindrical body, a lap or a coil.

6. The gas generator according to any one of the preceding claims, **characterized in that** the fuel (31) is in the form of one or more threads, and **in that** the gas-permeable fuel body (32) comprises a carrier (58), preferably a reel, onto which the thread or threads is/are wound.

7. The gas generator according to any one of the preceding claims, **characterized in that** the gas-permeable fuel body (32) fills at least 3 % of the volume of the pressure chamber (22), preferably 3 to 95 %, especially preferred 5 to 50 % of the volume of the pressure chamber (22).

8. The gas generator according to any one of the preceding claims, **characterized in that** the pressure chamber (22) contains, in addition to the gas-permeable fuel body (32), a pyrotechnical solid propellant received in the pressure chamber (22) wherein, preferably, the gas-permeable fuel body is present at least in the form of a hollow cylinder into which the pyrotechnical solid propellant is introduced.

9. The gas generator according to any one of the preceding claims, **characterized in that** the gas-permeable fuel body (32) is present spaced apart from the igniter (14) inside the pressure chamber (22), wherein the fuel body (32) is arranged at a distance of up to two times, preferably 0.5 to 1.5 times, and especially preferred one times, the inner diameter of the housing (12).

10. The gas generator according to any one of the preceding claims, **characterized in that** a component is provided which partitions the pressure chamber (22) while forming a combustion chamber (40) adjacent to the igniter (14), wherein the gas-permeable fuel body (32) and, optionally, the pyrotechnical solid propellant is received in the combustion chamber (40).

11. The gas generator according to claim 10, **characterized in that** the combustion chamber (40) occupies about 2 to 50 %, especially preferred 5 to 30 %, of the volume of the pressure chamber (22).

12. The gas generator according to any one of the preceding claims, **characterized in that**, when the gas generator (10) is activated, at least one shockwave occurs which can be propagated at least in portions through the pressure chamber (22) to cause the membrane (16) to be destroyed.

13. A module comprising a gas generator (10), an airbag inflatable by the gas generator (10) and a mounting device for attaching the module to a vehicle, **characterized in that** the gas generator is configured according to at least one of the claims 1 to 12.

14. A vehicle safety system, especially for the protection of a person such as a vehicle occupant or a pedestrian, comprising a gas generator (10), an airbag inflatable by said gas generator (10) as part of a module, and an electronic control unit by means of which the gas generator (10) can be activated, when a trigger situation is present, **characterized in that** the gas generator (10) is configured according to at least one of the preceding claims 1 to 12.

## Revendications

1. Générateur de gaz, en particulier pour un dispositif de sécurité de véhicule, comprenant
une chambre pressurisée (22) remplie de gaz sous pression (24), qui est fermée par une membrane (16) par rapport à un environnement du générateur de gaz (10), pour lequel le gaz sous pression (24) contient un agent oxydant gazeux, qui est constitué pour une part principale d'oxygène ;
un combustible solide (31) logé dans la chambre pressurisée (22), pour lequel le gaz de pression (24) est en contact direct avec le combustible (31) avant l'activation du générateur de gaz (10) ; et
un allumeur (14) séparé de manière étanche à la pression de la chambre pressurisée (22), par lequel, lors de l'activation du générateur de gaz (10), une réaction de l'agent oxydant gazeux avec le combustible solide (31) peut être déclenchée avec dégagement de chaleur ;
pour lequel le combustible (31) se présente sous la forme d'un corps combustible (32) perméable aux gaz et pour lequel la proportion molaire de l'oxydant gazeux dans le gaz comprimé (24) est au moins égale à 1,1 fois la quantité d'oxydant nécessaire pour une réaction stoechiométrique du corps combustible (32) perméable aux gaz, **caractérisé en ce que**
le combustible (31) se présente sous la forme d'un corps combustible perméable aux gaz (32) composé d'une ou plusieurs fibres, pour lequel le corps combustible perméable aux gaz (32) est construit à partir d'un matériau textile, dans lequel sont contenues lesdites une ou plusieurs fibres, pour lequel le matériau textile est choisi dans le groupe constitué d'un tissu, d'un tricot, d'une maille, d'un textile non-tissé, d'une toile, d'un feutre ou d'une ouate et de combinaisons de ceux-ci, et
pour lequel lesdites une ou plusieurs fibres sont des fibres naturelles et/ou des fibres synthétiques, pour lesquelles lesdites fibres naturelles sont des fibres végétales ou des fibres animales et lesdites fibres synthétiques sont constituées d'une matière plastique filable.

2. Générateur de gaz selon la revendication 1, **caractérisé en ce que** l'oxydant gazeux comprend de l'oxygène et d'autres oxydant gazeux, et présente de préférence une proportion molaire d'au moins 60 % d'oxygène.

3. Générateur de gaz selon la revendication 1 ou 2, **caractérisé en ce que** lesdites une ou plusieurs fibres sont des fibres de cellulose ou des fibres d'amidon.

4. Générateur de gaz selon l'une des revendications précédentes, **caractérisé en ce que** la ou les fibres sont filées en fils et/ou torsadées en fils et/ou en torsion, et sont de préférence transformées en un produit textile plat et/ou en un corps fibreux tridimensionnel.

5. Générateur de gaz selon l'une quelconque des revendications précédentes, **caractérisé en ce que** le corps combustible perméable au gaz (32) se présente sous la forme d'un corps cylindrique, d'un enroulement ou d'une spirale.

6. Générateur de gaz selon l'une quelconque des revendications précédentes, **caractérisé en ce que** le combustible (31) se présente sous la forme d'un ou plusieurs fils, et **en ce que** le corps combustible perméable aux gaz (32) comprend un support (58), de préférence un enrouleur, sur lequel le ou les fils sont enroulés.

7. Générateur de gaz selon l'une quelconque des revendications précédentes, **caractérisé en ce que** le corps combustible perméable aux gaz (32) remplit au moins 3% du volume de la chambre pressurisée (22), de préférence de 3 à 95%, plus préférentiellement de 5 à 50% du volume de la chambre pressurisée (22).

8. Générateur de gaz selon l'une quelconque des revendications précédentes, **caractérisé en ce que** la chambre pressurisée (22) contient, en plus du corps combustible (32) perméable aux gaz, un propergol solide pyrotechnique logé dans la chambre pressurisée (22), pour lequel le corps combustible (32) perméable aux gaz se présente notamment au moins sous la forme d'un cylindre creux dans lequel est introduit le propergol solide pyrotechnique.

9. Générateur de gaz selon l'une des revendications précédentes, **caractérisé en ce que** le corps combustible (32) perméable aux gaz est présent à distance de l'allumeur (14) à l'intérieur de la chambre pressurisée (22), pour lequel le corps combustible (32) est disposé à une distance allant jusqu'à deux fois, de préférence de 0,5 à 1,5 fois, et de manière particulièrement préférée à une fois le diamètre intérieur du corps (12).

10. Générateur de gaz selon l'une des revendications précédentes, **caractérisé en ce qu'**il est prévu un composant, lequel divise la chambre pressurisée (22) en formant une chambre de combustion (40) adjacente à l'allumeur (14), pour lequel le corps combustible perméable aux gaz (32) et, en option, le combustible pyrotechnique solide sont logés dans la chambre de combustion (40).

11. Générateur de gaz selon la revendication 10, **caractérisé en ce que** la chambre de combustion (40) occupe environ 2 à 50 %, de préférence 5 à 30 % du volume de la chambre pressurisée (22).

12. Générateur de gaz selon l'une des revendications précédentes, **caractérisé en ce que**, lors de l'activation du générateur de gaz (10), il se produit au moins une onde de choc qui peut être propagée au moins par sections à travers la chambre pressurisée (22) pour provoquer une destruction de la membrane (16).

13. Module comprenant un générateur de gaz (10), un coussin gonflable par le générateur de gaz (10) et un dispositif de fixation pour monter le module sur un véhicule, **caractérisé en ce que** le générateur de gaz est réalisé selon au moins l'une des revendications 1 à 12.

14. Système de sécurité pour véhicule, en particulier pour la protection d'une personne, par exemple d'un passager du véhicule ou d'un passant, comprenant un générateur de gaz (10), un coussin gonflable par celui-ci, en tant que partie d'un module, et une unité de commande électronique, au moyen de laquelle le générateur de gaz (10) peut être activé en présence d'une situation de déclenchement, **caractérisé en ce que** le générateur de gaz (10) est réalisé selon au moins l'une des revendications 1 à 12 précédentes.
